# EUROPEAN PATENT SPECIFICATION

(11) **EP 1 111 867 B1**
(45) Date of publication and mention of the grant of the patent: **02.08.2006**
(21) Application number: 00128001.5
(22) Date of filing: 20.12.2000
(51) Int. Cl.: H04L 27/26, H04H 1/00, H04L 25/06, H04L 27/38, H04B 7/08

(54) **Signal acquisition and frequency synchronization in multicarrier systems**
Anfangserfassung und Frequenzsynchronisierung in Mehrträgersystemen
Acquisition initiale et synchronisation de fréquence dans des systèmes multiporteuse

(30) Priority: 21.12.1999 JP 36228099
(43) Date of publication of application: 27.06.2001
(73) Proprietor: MATSUSHITA ELECTRIC INDUSTRIAL CO., LTD., Kadoma-shi, Osaka 571-8501 (JP)
(72) Inventor: Yomo, Hidekuni, Kawasaki-shi, Kanagawa 216-0015 (JP); Furuta, Akihiro, Kadoma-shi, Osaka 571-0051 (JP); Kunieda, Yoshinori, Kawasaki-shi, Kanagawa 214-0008 (JP)
(74) Representative: Grünecker, Kinkeldey, Stockmair & Schwanhäusser Anwaltssozietät

(56) References cited:
- EP-A- 0 689 314
- EP-A- 0 901 260

## Description

### BACKGROUND OF THE INVENTION

### Field of the Invention

The present invention relates to a DAB (Digital Audio Broadcasting) signal receiving apparatus which acquires synchronization using a non-signal interval in receiving a transmission signal in which a non-signal or a signal interval (hereinafter referred to as Null signal) with a level sufficiently lower than that of a general transmission signal is provided every predetermined period such as a DAB signal for digital speech broadcasting.

### Description of the Related Art

When synchronization is acquired using a non-signal interval in receiving a signal including a null signal, there is sometimes present an adjacent radio frequency channel (hereinafter referred to as adjacent channel) with power extremely higher than that of a desired radio frequency channel (hereinafter referred to as desired channel) in the vicinity of the desired channel. In such a case, only the use of a filter with a sharp cutoff characteristic in an intermediate frequency band such as a surface acoustic wave, which is conventionally used to cancel interfacing power due to the adjacent channel, is not able to attenuate the interfering power sufficiently. Therefore, the interfering power of the adjacent channel is dominant, and it is impossible to detect the Null signal of the desired channel.

In particular, when each channel signal is transmitted from a different place, for example, like the digital audio broadcasting (DAB), a situation occurs that power of the adjacent channel is higher than that of the desired channel by a few ten dB due to a variation in a radio propagation path caused by fading in receiving a signal while moving.

Further, in the case of receiving a signal at the stationary condition, when a receiving apparatus desires to receive a signal from a broadcasting station located a long distance away from the apparatus, a situation occurs that another broadcasting station existing near the receiving apparatus sometimes generates interfering power, and due to the interfering power, the receiving apparatus is not able to receive a signal from the desired broadcasting station although the apparatus is in an area enabling the apparatus to receive the signal from the desired station placed a long distance away from the apparatus.

A signal with a certain level could be received if synchronization was acquired even when large adjacent channel interference is present. Therefore, when adjacent channel power becomes larger gradually at the condition the synchronization is already acquired, the receiving station does not have a problem. However, acquisition is particularity important at the time of initializing reception during the time synchronization is not acquired and of seeking various channels.

One of a method for solving the above problem is described in Japanese Laid Open Patent Publication HEI9-360140 in which a band pass filter (BPF) with a narrowband in a desired channel band is provided separately to reduce an effect of an adjacent channel, and thereby AGC is performed. However, when an adjacent channel interfering signal with extremely high power is present, it is not possible to detect a Null signal even if the above method is used to follow a variation in desired signal power.

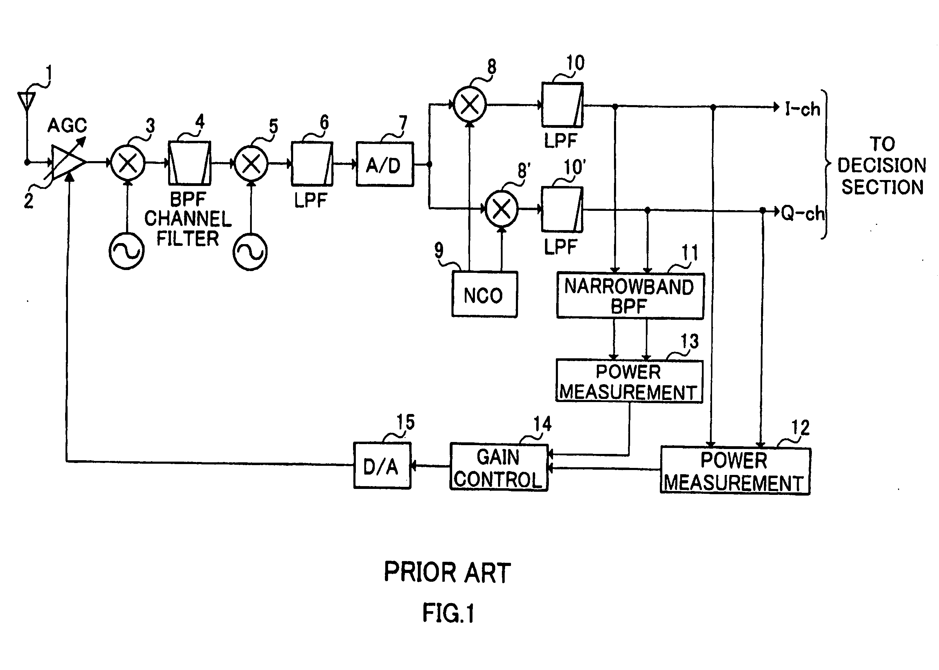

FIG.1 is a block diagram illustrating a configuration of a conventional receiving apparatus. In the receiving apparatus, auto gain control circuit 2 controls power of a signal received at reception antenna 1 based on a value of gain control section 14 determined in general band power measuring section 12 and desired channel band power measuring section 13.

When a level of an adjacent channel signal is sufficiently lower than that of a desired channel signal, gain control section 14 performs gain control adapted to general band power measured in the section 12, and outputs a gain controlled transmission signal to digital/analog converter 15.

Meanwhile, the level of the adjacent channel signal is higher than that of the desired channel signal, adjacent channel power that is not attenuated sufficiently by channel filter 4 and digital LPFs 10 and 10' is detected in general band power measuring section 12. Therefore, general band power measured in the section 12 is sufficiently higher than narrowband power measured in the section 13 as compared to the case where the adjacent channel is not present. At this point, when the control adapted to the adjacent channel power is performed, the level of the desired channel signal attenuates and comes close to a noise floor, and thereby the S/N ratio is decreased. To prevent this, gain control section 14 performs gain control adapted to the narrowband power in the section 13, controls the gain to amplify signal power, and outputs a gain controlled transmitted signal to digital/analog converter 15. The apparatus thereby prevents the desired signal level from coming close to the noise floor.

Then, the received signal is downconverted to a signal with an intermediate frequency band in frequency converter 3, and signal components beyond the desired channel band are suppressed in band pass filter (BPF) 4 that is a channel filter. Further, an output of band pass filter 4 is downconverted to a signal with a low frequency band in frequency converter 5, and an image of the resultant signal is cancelled in low pass filter (LPF) 6 for canceling an image caused by the frequency conversion.

The resultant signal is next converted to a digital signal in analog/digital converter 7, and the digital signal is multiplied by a sine wave or cosine wave output from numerically controlled oscillator (NCO) 9 respectively in digital multiplier 8 or 8', and thereby undergoes quadrature demodulation. Then, digital low pass filters 10 and 10' cancel alias components of the respective signals caused by A/D conversion, and thereby the signals are demodulated.

When a receiving station receives a signal provided with a Null signal such as a DAB signal, it is necessary for the station to acquire synchronization using a non-signal interval. The acquisition is performed by subjecting a received signal to parallel/serial conversion at a timing the Null signal is detected to perform Fast Fourier Transform (hereinafter referred to as FFT), and based on the FFT result, estimating a frequency offset amount to perform frequency control.

When an adjacent channel with high power is present in the vicinity of a desired channel, a general filter is not able to cancel an interfering signal of the adjacent channel sufficiently. Therefore, it becomes difficult to detect the Null signal, and even another Null signal is detected in the interfering signal of the adjacent channel. Further, using a filter with a sufficiently narrowband decreases an S/N ratio of the desired channel, and thereby reduces reception performance.

### SUMMARY OF THE INVENTION

It is an object of the present invention to provide a DAB signal receiving apparatus capable of completing initial synchronization acquisition fast even when an adjacent channel is present in the vicinity of a desired channel, without reducing reception performance after the initial acquisition, and of achieving a reduced circuit scale.

It is a subject matter of the present invention to detect a timing of a Null signal using tap coefficients enabling a filter with a sufficiently narrowband for suppressing adjacent channel power during the initial acquisition before the synchronization is acquired, subject a received signal to parallel/serial conversion to perform FFT, estimate a frequency offset amount from the FFT result to perform frequency control, and when judging that the initial acquisition is completed, switch the tap coefficients to those for passing a signal with a general band for demodulation, thereby reserving fast initial acquisition and high reception performance.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block circuit diagram illustrating a configuration of a conventional receiving apparatus;
FIG.2 is a block diagram illustrating a configuration of a receiving apparatus in a first embodiment of the present invention;
FIG.3 is a graph showing filter characteristics used before and after frame synchronization acquisition;
FIG.4 is a block diagram illustrating a configuration of a receiving apparatus in a second embodiment of the present invention;
FIG.5 is a block diagram illustrating a configuration of a receiving apparatus in a third embodiment of the present invention;
**FIG.6 is a block diagram illustrating a** configuration of a receiving apparatus in a fourth embodiment of the present invention;
FIG.7 is a block diagram illustrating a configuration of a receiving apparatus in a fifth embodiment of the present invention;
FIG.8 is a block diagram illustrating a configuration of a receiving apparatus in a sixth embodiment of the present invention;
FIG.9 is a block diagram illustrating a configuration of a receiving apparatus in a seventh embodiment of the present invention;
FIG.10 is a block diagram illustrating a configuration of a receiving apparatus in an eighth embodiment of the present invention;
FIG.11 is a diagram to explain decimating when an adjacent channel signal is not present in the eighth embodiment of the present invention;
FIG.12 is a diagram to explain decimating when an adjacent channel signal is present in the eighth embodiment of the present invention;
FIG.13 is a diagram to explain a frequency characteristic of a low pass filter in the eighth embodiment of the present invention;
FIG.14 is a block diagram illustrating a configuration of a receiving apparatus in a ninth embodiment of the present invention;
FIG.15 is a block diagram illustrating a configuration of a DC offset compensation section in the receiving apparatus in the ninth embodiment of the present invention;
FIG.16 is a block diagram illustrating a configuration of a receiving apparatus in a tenth embodiment of the present invention;
FIG.17 is a block diagram illustrating a configuration of a receiving apparatus in an eleventh embodiment of the present invention;
FIG.18 is a block diagram illustrating a configuration of a receiving apparatus in a twelfth embodiment of the present invention;
FIG.19 is a block diagram illustrating a configuration of a receiving apparatus in a thirteenth embodiment of the present invention;
FIG.20 is a block diagram illustrating a configuration of a receiving apparatus in a fourteenth embodiment of the present invention;
FIG.21 is a block diagram illustrating a configuration of a receiving apparatus in a fifteenth embodiment of the present invention;
FIG.22 is a block diagram illustrating a configuration of a receiving apparatus in a sixteenth embodiment of the present invention; and
FIG.23 is a block diagram illustrating a configuration of a receiving apparatus in a seventeenth embodiment of the present invention.

### DETAILED DESCRIPTION OF THE

### PREFERRED EMBODIMENTS

Embodiments of the present invention will be described specifically below with reference to accompanying drawings.

### (First embodiment)

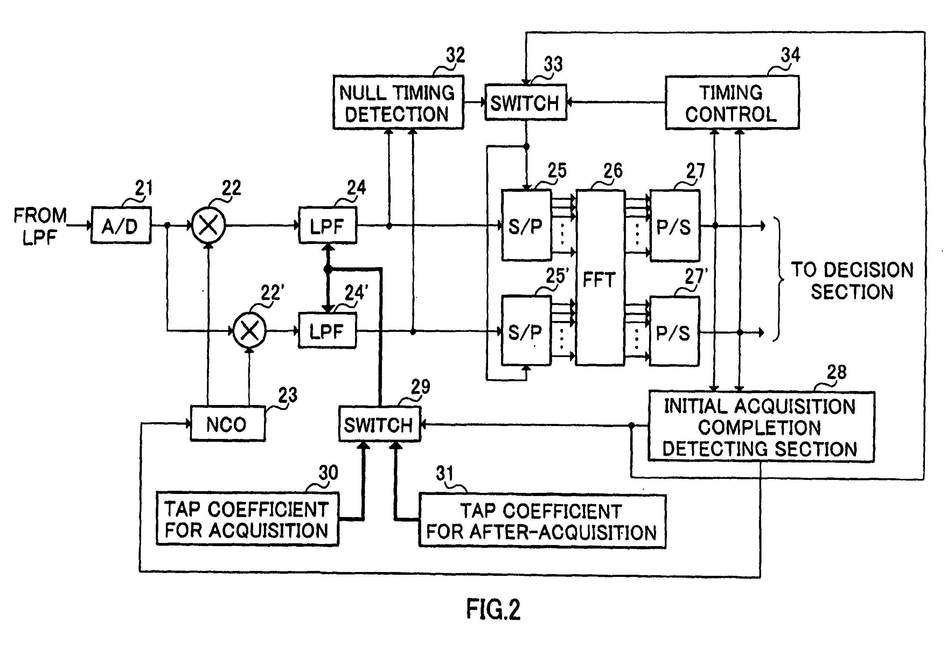

FIG.2 is a block diagram illustrating a configuration of a DAB signal receiving apparatus according to the first embodiment of the present invention. In FIG.2, the receiving apparatus of the present invention is comprised of analog/digital converting section 21, multiplying sections 22 and 22', numerically controlled oscillator section 23, low pass filter sections 24 and 24', serial/parallel (S/P) converting sections 25 and 25', Fast Fourier Transform section 26, parallel/serial (P/S) conversion sections 27 and 27', initial acquisition completion detecting section 28, tap coefficient group switching section 29, tap coefficient group for initial acquisition storage section 30, tap coefficient group after initial acquisition storage section 31, Null signal timing detecting section 32, switching section 33 and timing control section 34.

In the DAB apparatus with the above configuration, a signal to be sampled in analog/digital conversion section 21 is an IF(intermediate frequency) signal obtained by filtering the signal that is output of downconvertor which downconverts an RF(radio frequency) signal. An analog/digital converted signal is multiplied by a sine wave or cosine wave generated in numerically controlled oscillator 23 in multiplier 22 or 22', subjected to frequency conversion, and output to low pass filter section 24 or 24' where alias components are cancelled, respectively.

Null signal timing detecting section 32 generates a timing signal for S/P conversion sections 25 and 25' using signals output from low pass filter sections 24 and 24'. Serial/parallel conversion is performed in synchronism with the Null signal, and resultant signals are transformed to constituent frequency components in FFT conversion section 26.

The transformed signals are then converted to serial signals in P/S sections 27 and 27', and when initial acquisition completion detecting section 28 determines that the initial acquisition is completed, a conversion timing in S/P conversion section 25 is switched to be controlled by timing control section 34.

In other words, when the initial acquisition is completed, the timing obtained in the Null signal timing detecting section is not used, while during the time the initial acquisition is not completed, the serial/parallel conversion is performed using the timing of the Null signal timing detecting section.

Timing control section 34 controls the timing using a known phase reference signal transmitted after the Null signal. FFT conversion section 25 transforms a received phase reference signal to frequency region signals to obtain constituent frequency components (these are called subcarrier). The frequency components are divided by respective frequency components of the phase reference signal stored in advance in the receiving apparatus. The divided result is subjected to Inverse FFT (IFFT) to obtain impulse response of a propagation path. The timing control is performed so that a center of the impulse response becomes a center of a guard interval that is not input to FFT conversion section 26.

In the present invention, tap coefficients in low pass filters 24 and 24' are also switched using the signal in initial acquisition completion detecting section 28. During the time the initial acquisition is not completed, the low pass filters are comprised of tap coefficients stored in tap coefficient group for initial acquisition storage section 30. After the initial acquisition is completed, tap coefficient group switching section 29 switches the tap coefficients so that the low pass filters are comprised of tap coefficients stored in tap coefficient group after initial acquisition storage section 31.

Since a frequency band of a DAB signal is 1.536MHz, a cutoff frequency of the tap coefficients, which are generally used in demodulation, of tap coefficient group after initial acquisition storage section 31 is about 1.536MHz/2=768kHz. A frequency of an adjacent channel is present around 768kHZ+176kHz=944kHz. When power of the adjacent channel is larger than that of a desired channel, it is necessary to use a filter with a large scale to attenuate the adjacent channel power sufficiently, thereby resulting in an increased circuit scale.

Null signal timing detecting section 32 calculates either a square value or absolute value of a signal input thereto, inputs the value to the low pass filter, compares an output of the low pass filter with a predetermined threshold, and detects an interval with a level smaller than the threshold as a Null signal interval. Accordingly, it is required to attenuate the adjacent channel power sufficiently. Otherwise, a Null timing of the adjacent channel is detected even when a parameter (cutoff frequency of the low pass filter or threshold) in the Null signal detecting section is changed, and thereby it is made impossible to detect the Null signal timing of the desired channel.

Therefore, at the time of initial acquisition, the tap coefficients are used that have a narrowband low pass filter characteristic such that the cutoff frequency is about 10kHz, which enables the adjacent channel power to be attenuated sufficiently. In addition, in order to prevent the circuit scale from increasing, the filter which is generally used in demodulation after the initial acquisition is completed is used instead of providing another filter, and the tap coefficients are only changed. Thus using the same filter enables a Null signal of a desired channel to be detected assuredly only by installing a circuit for storing the tap coefficients, and further enables the fast acquisition.

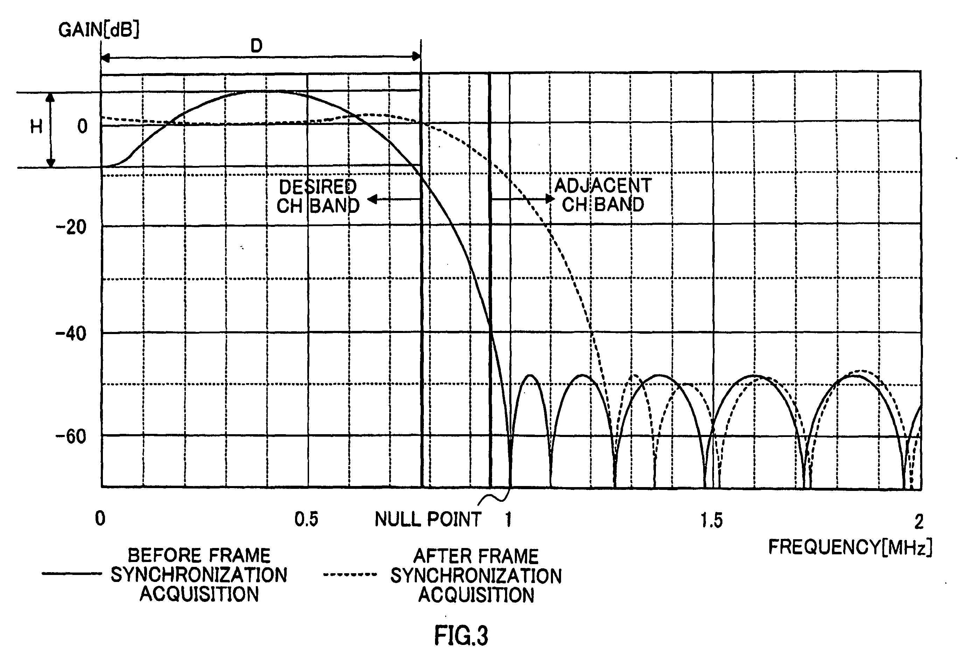

Further, as a narrowband filter used before frame synchronization acquisition, as shown in FIG.3, it is preferable to use a filter such that a pass band is almost the same as that of another filter used after the acquisition, a ripple in the pass band is allowed to be large, and that tap coefficients have a frequency characteristic that a first drop point (null point) in a cutoff band is around a frequency of an adjacent channel. It is thereby possible to concurrently perform fast synchronization acquisition and frequency offset compensation even when a frequency offset is large.

The filter characteristics in FIG.3 are explained. In FIG.3, a solid line indicates the frequency characteristic of a filter used before frame synchronization acquisition, and a dotted line indicates the frequency characteristic of another filter used after the frame synchronization acquisition. A pass band (D) is almost the same in the frequency characteristics indicated with the solid line and dotted line. In the filter corresponding to the solid line, a null point is present near an edge at a low frequency side of an adjacent channel region. Therefore a ripple amount (gain H) is large. Meanwhile, in the filter corresponding to the dotted line, a ripple amount is small, however a null point is spaced relatively a distance away from the edge at the low frequency side of the adjacent channel region.

In the present invention, such filters are switched between before and after the frame synchronization acquisition. In addition, it is preferable to set the characteristic of the filter corresponding to the solid line as appropriate so as to perform frequency offset correction excellently.

A specific explanation is given below of the operation for switching the tap coefficients of the filters (switching the filter of the solid line to the filter of the dotted line).

In the DAB apparatus illustrated in FIG. 1, a filter is constructed using the tap coefficient group for the acquisition stored in the section 30. The filter with the frequency characteristic of the solid line in FIG.3 is thereby constructed.

Under this condition, Null timing detecting section 32 detects a Null timing. Specifically, in a signal format of DAB, a Null signal is provided at a beginning of a frame, and therefor timings are generated periodically at which a signal power is low. To detect the timing, in Null signal detecting section 32, an instant power level is obtained, the low pass filter integrates the obtained instant power level, and when the integrated value is less than or equal to a predetermined threshold, it is judged that the Null signal is detected, thereby detecting the timing. In order to cope with a case that it is difficult to detect the null signal by searching a single frame due to variation in received signal power level caused by, for example, fading, it is preferable to perform statistical processing such as processing for adding in phase synchronization the integrated value of the instant power level over a frame length as a period. Further, it is also preferable to change the threshold adaptively, for example, to increase when the average received signal power is high, while decreasing when the power is low, instead of using a predetermined threshold.

Using the determined timing, initial acquisition completion detecting section 28 detects frame synchronization acquisition. Specifically, the section 28 measures a frequency offset amount, and determines a point of time the frequency offset amount falls below the predetermined threshold as a frame acquisition completion point. When the frequency offset amount is more than the predetermined threshold, the section 28 performs feedback control on NCO 23. A phase reference symbol inserted immediately after the Null signal is used to measure a frequency offset amount. The phase reference symbol is a known signal, and the frequency offset amount can be measured by performing correlation calculation processing with a phase reference symbol prepared in advance in the receiving apparatus. Since the measured frequency offset amount varies due to an effect, for example, of a thermal noise contained in the received signal, it is also preferable to integrate the measured frequency offset amount with a low pass filter to reduce the effect of the thermal noise and the like.

When the frame synchronization acquisition is completed, the section 28 outputs a control signal to tap group switching section 29, and the section 29 switches the tap coefficient group for the acquisition of the section 30 to the tap coefficient group after the acquisition of the section 31. Then, a filter is constructed using the tap coefficient group of the section 31. The filter with the frequency characteristic of the dotted line in FIG.3 is thereby constructed.

After that, in order to improve timing accuracy in the serial/parallel conversion, switching section 33 switches control systems, and timing control section 34 performs timing control. It is thereby possible to receive signals with increased reception performance, using the filter with the frequency characteristic such that the ripple amount is small as shown in FIG.3.

Thus, according to this embodiment, a narrowband filter suitable for Null timing detection is used until the Null timing is detected, and then another narrowband filter advantageous in reception performance is used after the frame synchronization acquisition is completed, whereby it is possible to reserve fast frame synchronization acquisition and high reception performance.

### (Second embodiment)

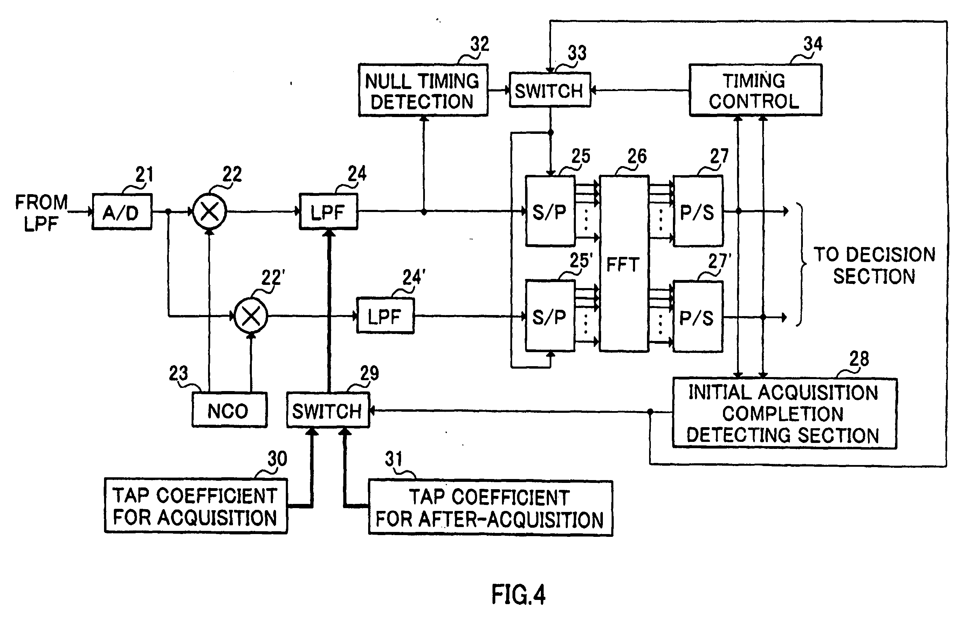

FIG.4 is a block diagram illustrating a configuration of a DAB signal receiving apparatus according to the second embodiment of the present invention. In the signal receiving apparatus illustrated in FIG.4, tap coefficients of one of low pass filter sections 24 and 24' are switched, and tap coefficients of another one of low pass filter section 24 and 24' are fixed to the tap coefficients after the initial acquisition which are used in general demodulation. A low pass filter of which the tap coefficients are switched only inputs a signal to Null timing detecting section 32.

The above configuration enables the circuit scale to be reduced, and is advantageous in determining whether or not the initial acquisition is completed in initial acquisition completion detecting section 28. The reason for this is, as mentioned later in a third embodiment, that when a known signal is used, desired signal power of either an in-phase component or quadrature component is not attenuated and then subjected to FFT, consequently the correlation with the known signal is large, and thereby determination errors are reduced. Thus improved detection accuracy in initial acquisition completion detecting section 28 enables fast initial acquisition.

### (Third embodiment)

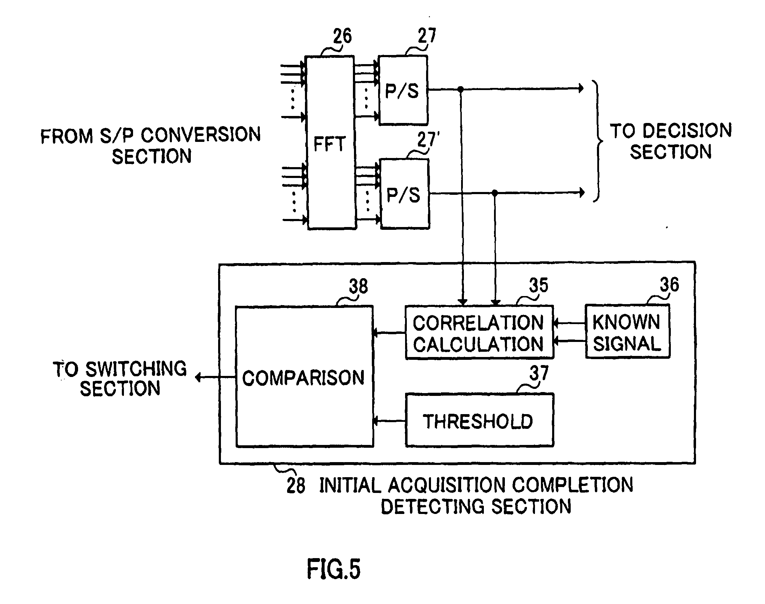

FIG.5 is a block diagram illustrating a partial configuration of a DAB signal receiving apparatus according to the third embodiment of the present invention. In the signal receiving apparatus in FIG.5, initial acquisition completion detecting section 28 in FIG.2 is illustrated specifically. The section 28 has known phase reference signal storage section 36 that stores a signal in frequency domain which is corresponding to phase reference signal, correlation calculation section 35 that performs correlation calculation of the signal output from the section 36 and a signal obtained by subjecting FF transformed signals to parallel/serial conversion in the section 27, threshold storage section 37, and comparing section 38.

In the DAB signal, the Null signal is followed by the phase reference signal which is already known. Therefore, the correlation of the phase reference signal with the signal stored in advance in the receiving apparatus is calculated, and when the calculated correlation result is large, it is estimated that the Null signal is detected at a proper timing. Then, the calculated correlation result is compared with a predetermined threshold of the section 37, and when the result is larger than the threshold 37, it is determined that the initial acquisition is completed, while when the result is smaller than the threshold, it is determined that the initial acquisition is not completed.

### (Fourth embodiment)

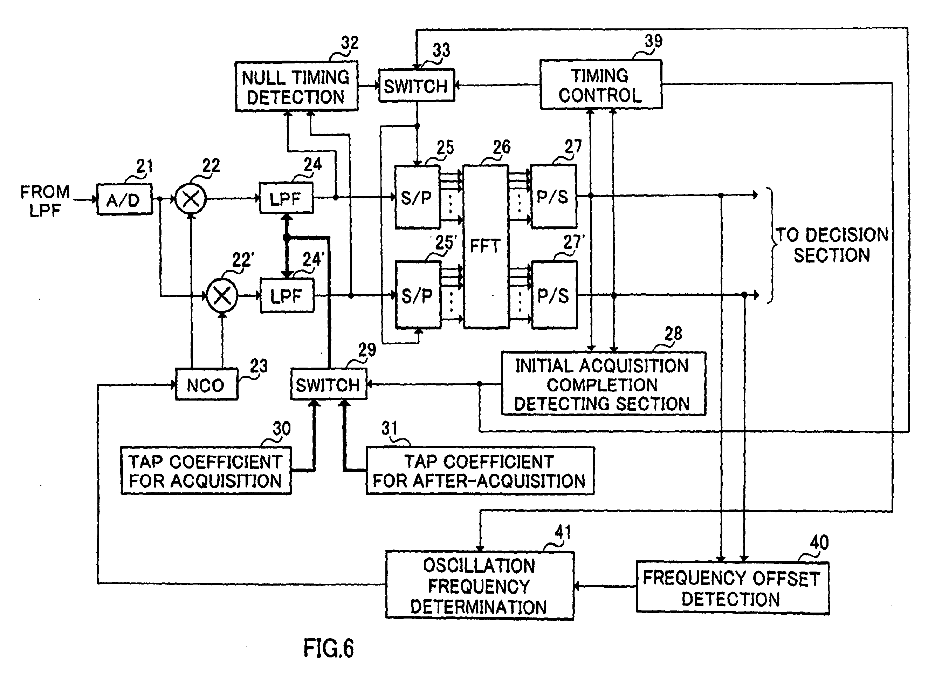

FIG.6 is a block diagram illustrating a configuration of a DAB signal receiving apparatus according to the fourth embodiment of the present invention. The signal receiving apparatus in FIG.6 has frequency offset detecting section 40, oscillation frequency determining section 41, and timing control section 39 that outputs a frame synchronization signal to the section 41 as well as for the serial/parallel conversion timing, in addition to the configuration of the DAB signal receiving apparatus in FIG.2.

Since a frequency changes, for example, in a downconverter not shown due to environment temperature and so on, a frequency offset is generated with a transmitting station, and thereby reception performance deteriorates. The frequency offset can be compensated by changing an oscillation frequency in numerically controlled oscillation section 23. A received signal is transformed to frequency components in FFT section 26, resultant signals are converted to serial signals in P/S conversion section 27 and 27', and then a frequency offset amount is detected in frequency offset detecting section 40.

The section 40 calculates the correlation of the received signal with the phase reference signal that is a known signal, and thereby detects the frequency offset amount. Oscillation frequency determining section 41 accumulates detected frequency offset amounts to determine an oscillation frequency, and limits a timing of changing the oscillation frequency to a Null signal interval. It is because the oscillation frequency is changed only when a frame synchronization signal, generated in timing control section 39, synchronized with the Null signal is input to oscillation frequency determining section 41.

Timing control section 39 uses the frame synchronization signal to generate a serial/parallel conversion timing, and outputs the frame synchronization signal to be used to change the oscillation frequency. By thus limiting a timing for changing the oscillation frequency to the Null signal interval, the frequency is changed in the Null signal interval that does not affect reception performance even when the frequency should be changed largely, while the frequency is constant in other signal intervals that affect the reception performance, and thereby it is possible to prevent the deterioration of the reception performance.

### (Fifth embodiment)

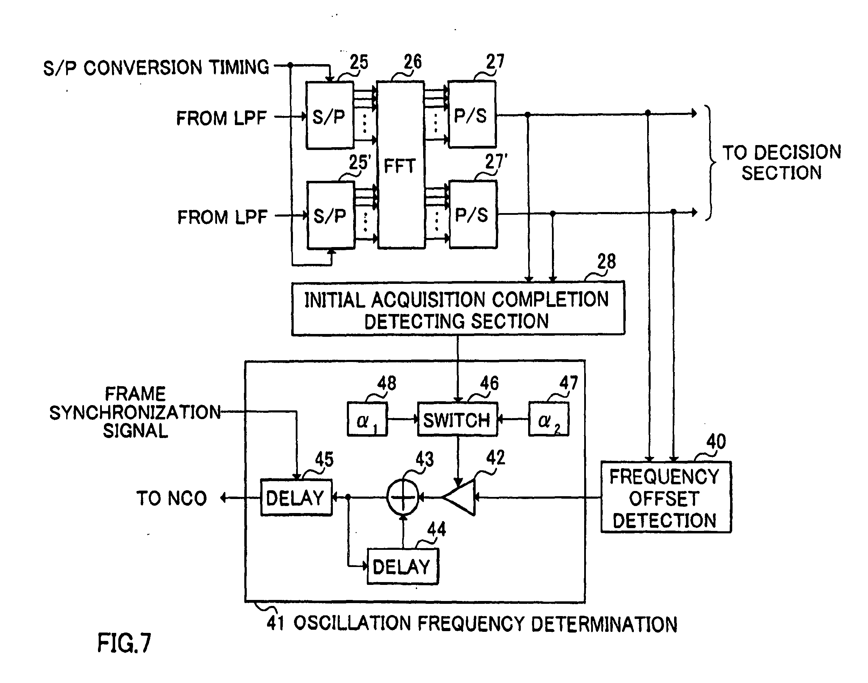

FIG.7 is a block diagram illustrating a configuration of a DAB signal receiving apparatus according to the fifth embodiment of the present invention. In the signal receiving apparatus in FIG. 7, a coefficient in accumulation in frequency determining section 41 is switched between a case that the initial acquisition is completed and another case that the initial acquisition is not completed. The apparatus has coefficient multiplying section 42, adding section 43, delay section 44, delay section with output timing control function 45, coefficient switching section 46, coefficient for initial acquisition storage section 47, and coefficient after initial acquisition storage section 48.

When frequency determining section 41 accumulates frequency offset amounts detected in frequency offset detecting section 40, the section 41 multiplies a currently detected frequency offset amount by a coefficient to add to an accumulated value of previously detected amounts. The coefficient is changed after the initial acquisition is completed. When initial acquisition completion detecting section 28 determines that the initial acquisition is not completed, the coefficient stored in the section 47 is multiplied, and when the section 28 determines that the initial acquisition is completed, the switching section 46 switches the coefficient to the coefficient after the initial acquisition.

Each of the two coefficients is a positive number ranging from 0 to 1. A variation in the oscillation frequency is larger as the coefficient comes close to 1, while the variation is smaller as the coefficient comes close to 0. The coefficient is set to a value close to 1 at the time of initial acquisition because it is necessary to acquire synchronization fast even if an error is contained to some content. Then, the coefficient is set to a value close to 0 after the initial acquisition is completed in order to prevent the frequency to vary due to a short-term frequency variation, for example, of a local signal of a downconverter not shown. Setting the coefficient as described above enables fast initial acquisition, stably maintained frequency synchronization, and improved performance in the receiving apparatus.

Adding section 43 adds the amount multiplied by the coefficient to an output of delay section 44 storing the accumulated value of previous amounts, and stores the resultant in delay section with output timing control function 45. As described in the fourth embodiment, the delay section 45 operates to limit the timing for changing the oscillation frequency to the Null signal interval in synchronism with the frame synchronization signal. In the thus configured apparatus, the oscillation frequency to be input to numerically controlled oscillation section 23 changes only in the Null signal interval.

### (Sixth embodiment)

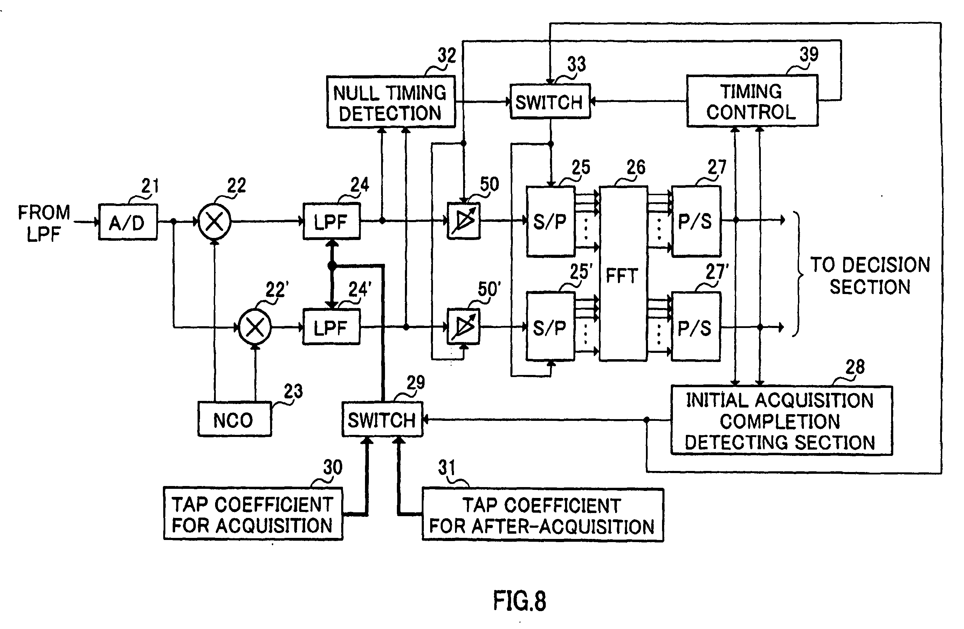

FIG.8 is a block diagram illustrating a configuration of a DAB signal receiving apparatus according to the sixth embodiment of the present invention. The signal receiving apparatus in FIG.8 has auto gain control sections 50 and 50' and timing control section 39 that outputs a frame synchronization signal to the section 50 as well as for the serial/parallel conversion timing, in addition to each section composing the DAB signal receiving apparatus in FIG.2.

Auto gain control section 50 updates a gain limiting a timing of updating to the Null signal interval in synchronism with the frame synchronization signal from timing control section 39. The gain thereby does not change in other intervals except the Null signal interval, whereby the reception performance does not deteriorate, and can be improved even when a signal level of a desired channel varies, for example, due to fading because the gain control can be adapted to the variation. In particular, this method is suitable as a gain control method when interfering power of an adjacent channel is large.

### (Seventh embodiment)

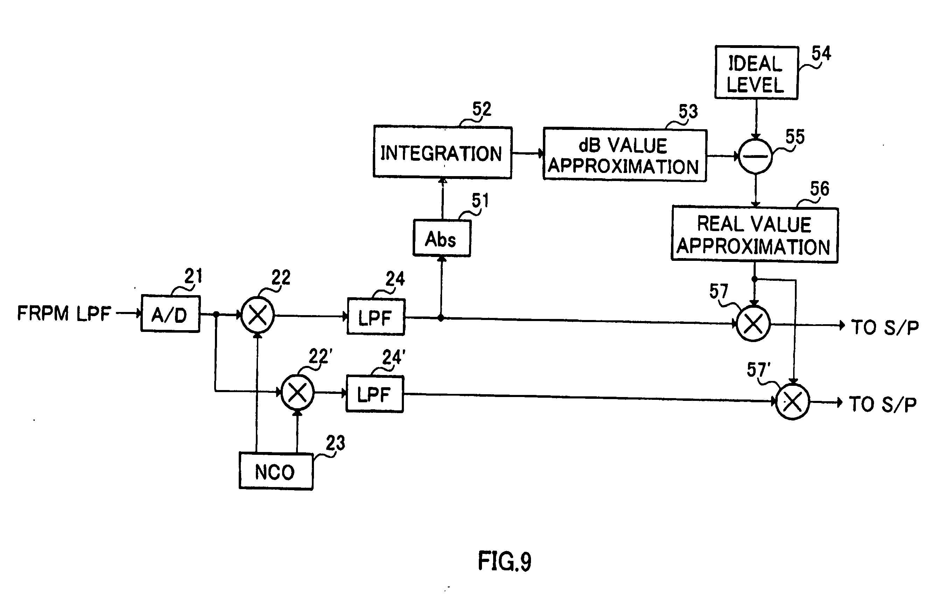

FIG.9 is a block diagram illustrating a configuration of a DAB signal receiving apparatus according to the seventh embodiment of the present invention. In the DAB signal receiving apparatus in FIG.9, auto gain control sections 50 and 50' are illustrated specifically, where a signal level of either an in-phase component or quadrature component is detected. The sections are comprised of absolute value calculating section 51, integrating section 52, approximation conversion section 53 that converts a real value to a dB value, ideal level storage section 54, subtracting section 55, approximation conversion section 56 that converts a dB value to a real value, and multiplying sections 57 and 57'.

Absolute value calculating section 51 obtains an absolute value using an output of low pass filter section 24 for canceling alias components, and integrating section 52 integrates obtained absolute values to detect a signal level. The value obtained in integrating section 52 is a real value, and approximation conversion section 53 converts the real value to a dB value approximately. The section 53 stores in advance sample values (lookup table) of dB values corresponding to real values. It is also suitable for the section 53 that converts a real value to a dB value to calculate the dB value approximately instead of using the lookup table.

Subtracting section 55 obtains a difference between an ideal value form ideal level storage section 54 and the dB value output from approximation conversion section 53. Approximation conversion section 56 converts the difference value obtained in subtracting section 55 to a real value. The section 56 stores in advance sample values (lookup table) of real values corresponding to dB values. It is also suitable for the section 56 that converts a dB value to a real value to calculate the real value approximately instead of using the lookup table. Multiplying sections 57 and 57' respectively multiply an in-phase component and quadrature component by the real value of a difference gain value from the ideal level obtained as described above, and thereby performs the auto gain control.

In addition, as a signal to be input to integrating section 52, while an absolute value is used, a square is also usable.

### (Eighth embodiment)

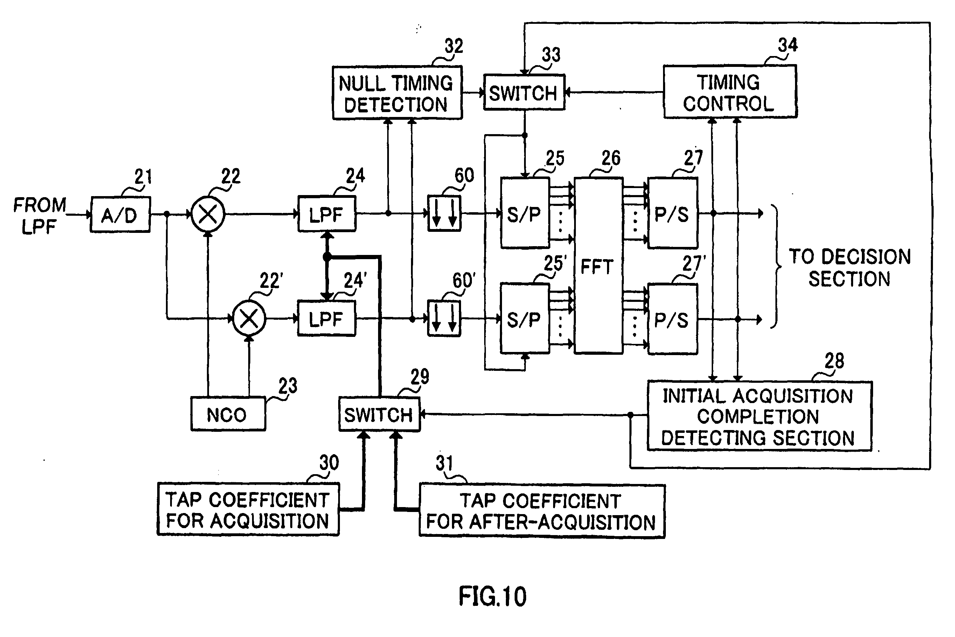

FIG.10 is a block diagram illustrating a configuration of a DAB signal receiving apparatus according to the eighth embodiment of the present invention. The DAB signal receiving apparatus illustrated in FIG.10 has decimating section 60 in addition to the configuration in FIG.2.

As an example of a case of receiving a DAB signal, assume a system that an IF signal with a center frequency of 2.048MHz is converted to a digital signal by analog/digital conversion, and then demodulated. In a circuit for converting the IF signal with a center frequency of 2.048MHz to a baseband signal with a center frequency of DC, when a digital mixing system is performed using a numerically controlled oscillation section, the signal is subjected to analog/digital conversion at a sampling rate of 8.192MHz, and the resultant signal is multiplied by a sine wave or cosine wave of 2.048MHz such as 0, 1, 0, -1, ... from the numerically controlled oscillation section. Then, the low pass filter arranged after the A/D conversion section is provided with a characteristic for canceling an alias component of 4.096MHz.

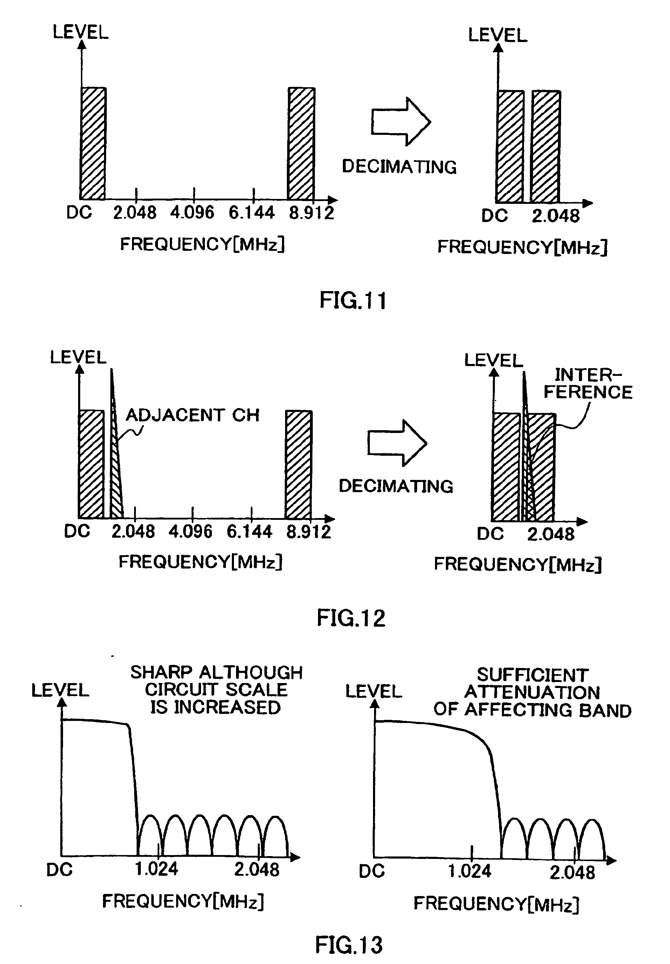

A frequency band of the DAB signal is 1.536MHz, and it is only required for an FFT section needed for OFDM signal demodulation to convert a signal with a frequency band of 1.536MHz in terms of circuit scale and power consumption. Therefore, a conversion frequency band of 2.048MHz is adequate, and it is necessary to decimate (downsample) discrete signals of 8.192MHz to those of 2.048MHz after passing through the low pass filter. In other words, the rate is decreased to one-fourth. At this point, when a received signal contains only the desired channel signal, decimating is performed without any problem as illustrated in FIG. 11. However, when an adjacent channel signal is present as illustrated in FIG.12, the adjacent channel signal provides interference in the desired channel signal due to the alias component.

According to the specification of DAB, a guard frequency between an adjacent channel and a desired channel is only 175kHz. In FIG.12, the adjacent channel signal has a sharp form with a narrow band as compared to the desired channel signal. It is because to indicate that the adjacent channel signal is attenuated by a channel filter generally provided before the analog/digital conversion section. Providing the channel filter with a sharp characteristic is advantageous, however, results in an increased circuit scale. Then, it is assumed to use the channel filter with an attenuation characteristic of certain level.

In order to reduce the effect of the adjacent channel interference, it is preferable to provide the low pass filter after the analog/digital conversion section with a sharp characteristic, however obtaining the sharp characteristics also results in an increased circuit scale. Therefore, in this embodiment, the low pass filter is provided with a characteristic for sufficiently attenuating components with frequencies of 1280kHz and more that affect the desired signal channel band while allowing adjacent channel components with frequencies (767kHz-1280kHz) that do not affect the desired signal channel band. A general idea of the foregoing is shown in FIG.13.

### (Ninth embodiment)

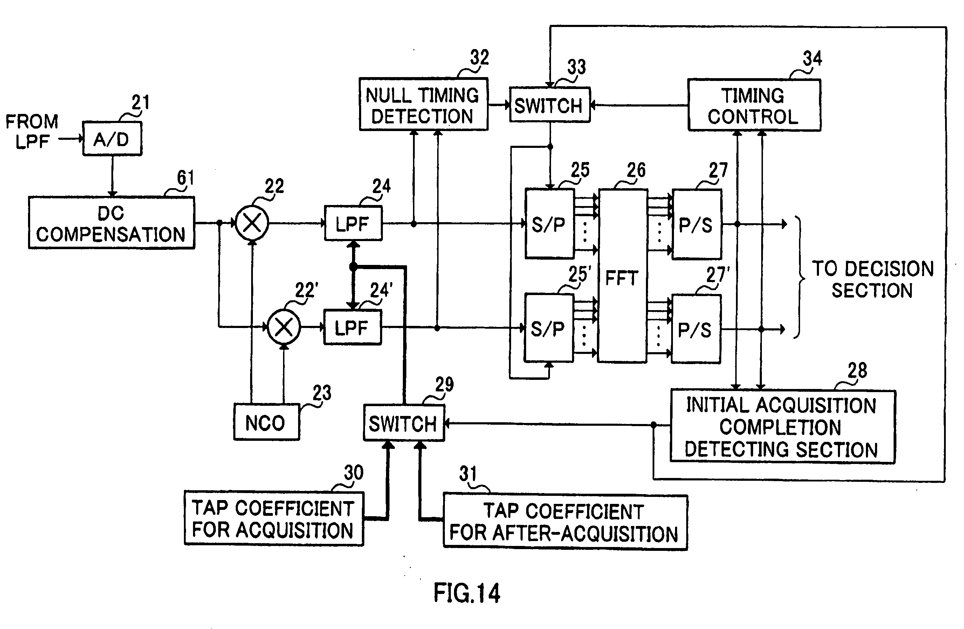

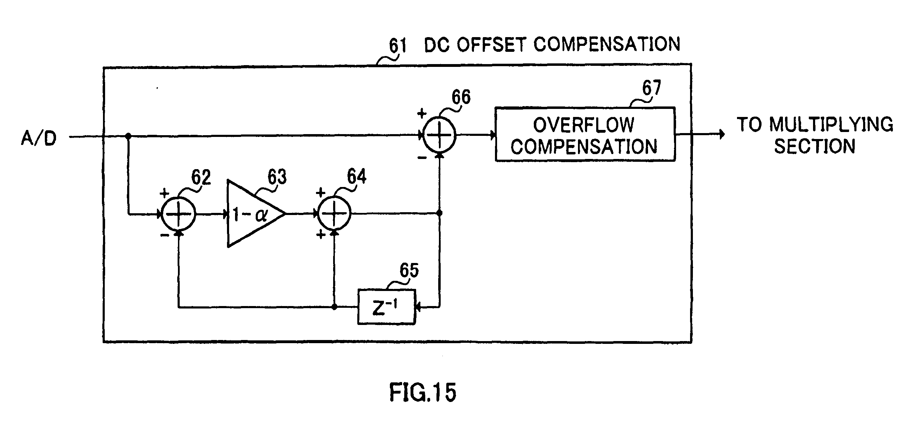

FIG.14 is a block diagram illustrating a configuration of a DAB signal receiving apparatus according to the ninth embodiment of the present invention. The signal receiving apparatus in FIG.14 has a DC offset compensation section 61 in addition to the configuration in FIG.2. FIG.15 illustrates a configuration of the DC offset compensation section. The section in FIG.15 is comprised of adding section 62, multiplying section 63, adding section 64, delay section 65, adding section 66, and overflow compensation section 67. The configuration illustrated in FIG.15 before the overflow compensation section is equivalent to a general high pass filter.

Overflow compensation section 67 performs clipping when the overflow is judged. For example, the section 67 observes a highest bit and a second bit from the highest of an output from adding section 66 at the time of complement of 2, judges that a positive number overflows in the case of 01, and that a negative number overflows in the case of 10, and based on the judged result, performs clipping to a positive maximum or a negative minimum.

### (Tenth embodiment)

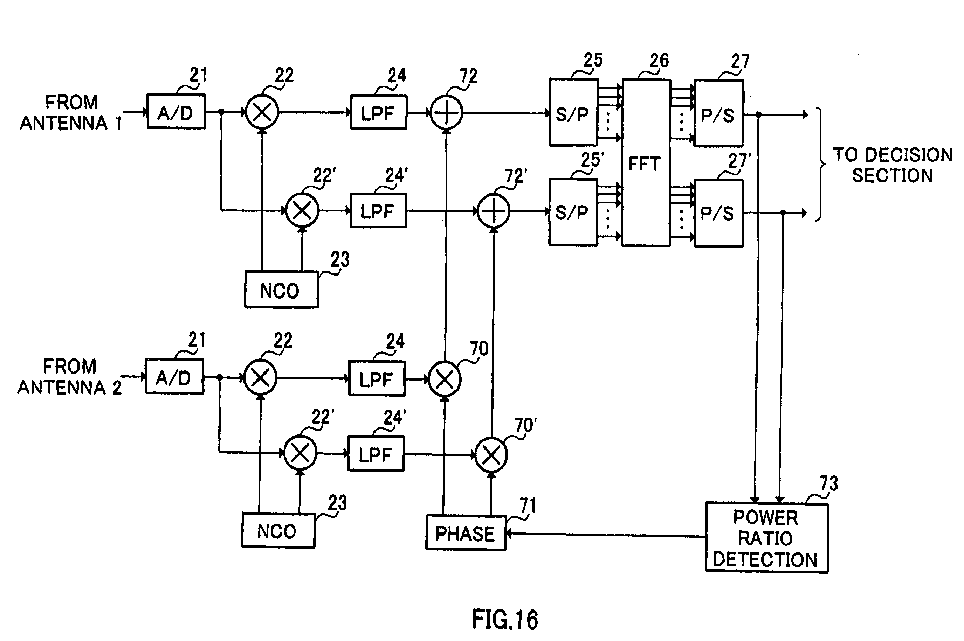

FIG.16 is a block diagram illustrating a configuration of a DAB signal receiving apparatus according to the tenth embodiment of the present invention. The signal receiving apparatus in FIG.16 is designed to deal with inputs from a plurality of antennas by using a plurality of analog/digital conversion sections 21, of multiplying sections 22 and 22', of numerical controlled oscillator sections 23, and low pass filter sections 24 and 24' among the configuration in FIG.2. FIG.16 illustrates a case of using two antennas.

Further, the signal receiving apparatus is comprised of the aforementioned sections, multiplying sections 70 and 70', phase rotation control section 71, adding sections 72 and 72', power ratio detection section 73 for desired channel and adjacent channel 73, and sections illustrated in FIG.2.

Signals input from a plurality of antennas are subjected to analog/digital conversion in respective conversion sections, then to frequency conversion, and passed through respective low pass filters. After being passed through the filter, each resultant signal is multiplied by a sine wave or cosine wave corresponding to its phase in multiplying section 70 or 70' respectively in order to perform a phase rotation determined in phase rotation control section 71.

Phase rotation control section 71 performs the phase control to decrease a ratio of adjacent channels power to desired channels power detected in the power ratio detecting section 73 to reduce an effect of adjacent channel interference. In-phase components or quadrature components of the signal with the rotated phase and of a signal with an original phase are added respectively in adders 72 and 72' to reduce the adjacent channel component.

The power ratio detecting section 73 detects the adjacent channel power from a fast-Fourier transformed signal in this method. Further as another method, for example, it is preferable to use a method of estimating a level of the adjacent channel power from a power ratio of an input power to the low pass filter to a level of adder 72 or 72'.

The control in this embodiment is effective, in particular, when a direction of a received desired channel signal is greatly different from that of a received adjacent channel signal.

### (Eleventh embodiment)

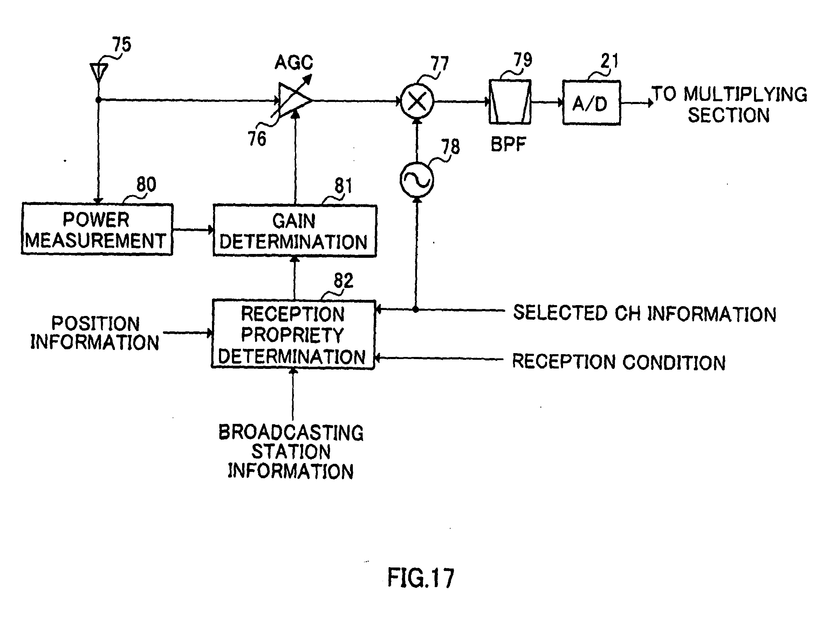

FIG.17 is a block diagram illustrating a configuration of a DAB signal receiving apparatus according to the eleventh embodiment of the present invention. The signal receiving apparatus in FIG.17 is comprised of reception antenna 75, gain control section 76, mixer 77, local signal oscillation section 78, band pass filter section 79, analog/digital conversion section 21, power measuring section 80, gain determining section 81, and reception propriety determining section 82.

In this embodiment, power measuring section 80 measures a power level of an output signal from reception antenna 75, and gain determining section 81 controls gain control section 76 so that a signal with a proper level is input to mixer 77. An oscillation frequency of local signal oscillation section 78 is set based on selected channel information, a received signal is multiplied by the signal from the section 78 in mixer 77, and then band pass filter section 79 outputs only a desired channel signal. When the received signal does not contain an adjacent channel interfering signal, it is preferable to provide a signal with a level that does not generate mutual distortion modulation to mixer 77.

However, when the received signal contains an adjacent channel interfering signal with a high level, the power level detected in power detecting section 80 is adapted to the adjacent channel signal power level, therefore gain control section 76 performs the gain control to decrease the gain, and as a result, the desired channel signal level drops around a noise floor. In this case, it is not possible to receive a desired channel signal which could be received if the adjacent channel signal were not present.

To prevent the aforementioned phenomenon, as illustrated in FIG.17, the apparatus is provided with reception propriety determining section 82 that determines the propriety of the reception from position information, broadcasting station information, reception condition and selected channel information. When it is not possible to receive a desired channel signal which could be received originally, it is judged that the signal cannot be received due to the adjacent channel interfering, and gain control section 76 controls a gain to set at a high level, while allowing mutual modulation distortion to some degree in mixer 77.

The broadcasting station information is obtained by using a storage section for storing a position and frequency of a broadcasting station in advance. The selected channel information is indicative of a frequency of a channel that a user selects. Providing such control enables an increased power ratio of the desired channel signal power to the noise power, and therefore is preferable.

### (Twelfth embodiment)

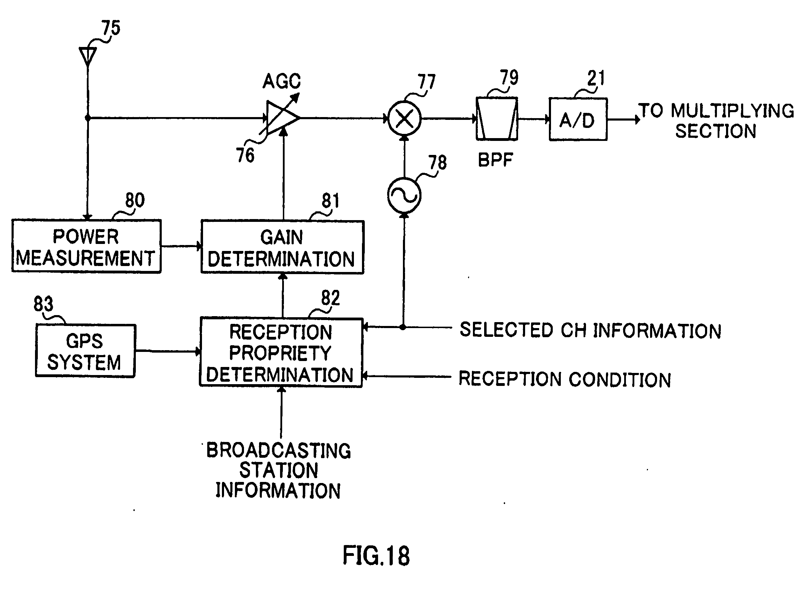

FIG.18 is a block diagram illustrating a configuration of a DAB signal receiving apparatus according to the twelfth embodiment of the present invention, and illustrates an example of the method of obtaining the position information for use in the configuration illustrated in FIG.17. A position information acquiring section to obtain the position information as in FIG.18 is able to acquire correct position information using GPS system 83, and thereby determines the propriety of the reception accurately.

### (Thirteenth embodiment)

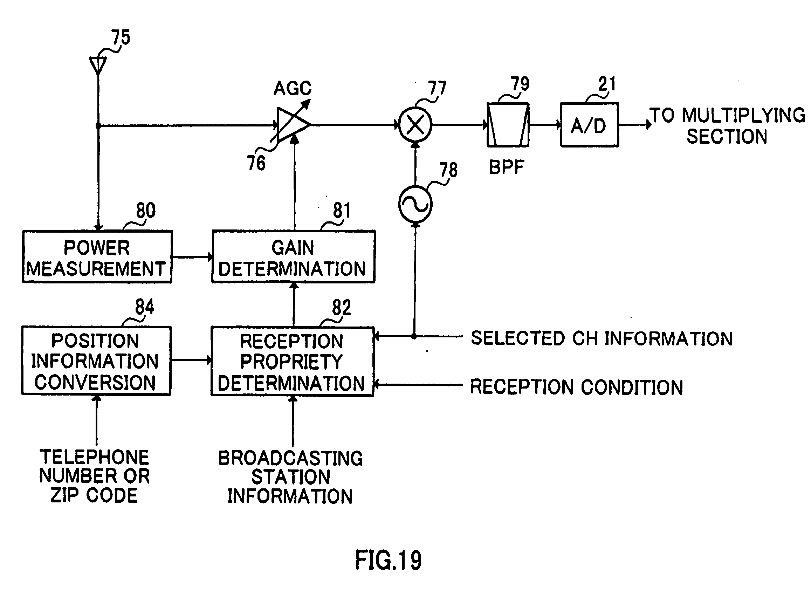

FIG.19 is a block diagram illustrating a configuration of a DAB signal receiving apparatus according to the thirteenth embodiment of the present invention, and illustrates an example of the method of obtaining the position information for use in the configuration illustrated in **FIG. 17.** In a position information acquiring section to obtain the position information as in FIG.19, a user is required to input information indicative of a telephone number or ZIP code thereof, and position information conversion section 84 that stores a table relating the number to a corresponding position outputs the position information. Using such a configuration enables a current position of a receiving apparatus to be obtained with a simplified method.

### (Fourteenth embodiment)

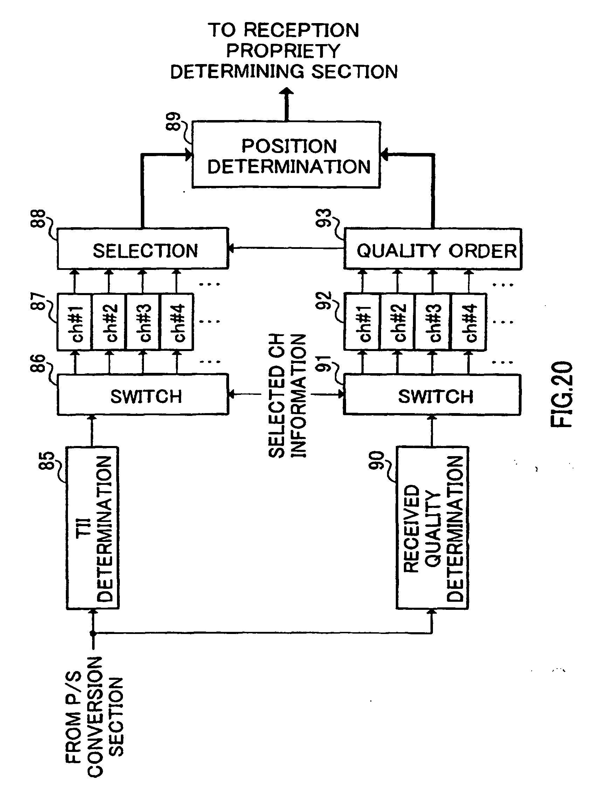

FIG.20 is a block diagram illustrating a configuration of a DAB signal receiving apparatus according to the fourteenth embodiment of the present invention, and illustrates an example of a method of obtaining the position information for use in the configuration illustrated in FIG.17. The apparatus is comprised of TII (Transmitter Identification Information) determining section 85, switching section 86, storage sections 87, selecting section 88, position determining section 89, received quality determining section 90, switching section 91, storage sections 92 and quality order judging section 93.

TII determining section 85 determines the transmitter identification information using a signal output from the parallel/serial conversion section in the signal receiving apparatus in FIG.2, switching section 86 allots the TI information of a selected channel to respective storage section 87, and each storage section 87 stores the TI information corresponding to a respective channel. Meanwhile, received quality determining section 90 determines a received quality from the signal output from the P/S conversion section, switching section 91 allots the received quality of a selected channel to respective storage section 92, and each storage section 92 stores the received quality corresponding to a respective channel.

Quality order determining section 93 decides an order of stored received qualities, and inputs the order to selecting section 88. Based on the decided order, selecting section 88 inputs the TT information of a plurality of channels each with excellent received quality to position determining section 89. At the same time, quality order determining section 93 inputs received qualities of the plurality of channels each with excellent received quality to position determining section 89.

Position determining section 89 obtains positions of broadcasting stations from the TT information of the plurality of channels, and determines a position of the receiving apparatus based on the received quality of the signal transmitted from each of the stations. That is, it is assumed that the receiving apparatus is present at a position close to a broadcasting station with excellent received quality. Making the determination on the plurality of broadcasting channels enables an almost position of the receiving apparatus between the broadcasting stations to be determined.

### (Fifteenth embodiment)

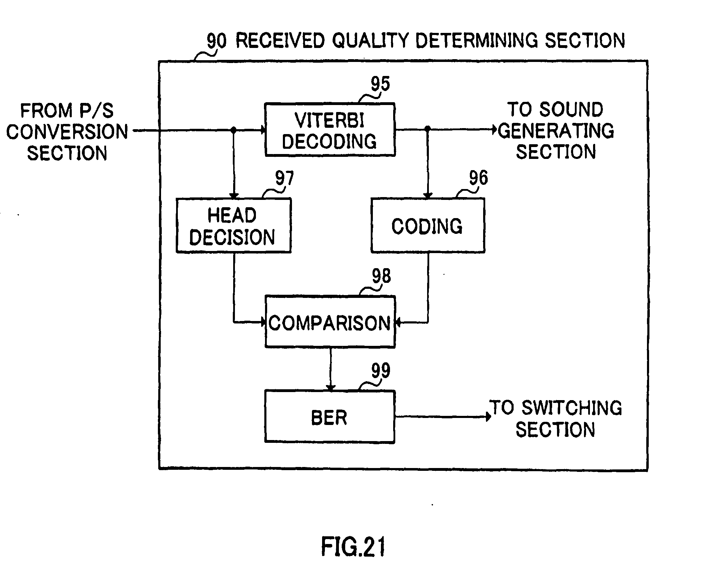

FIG.21 is a block diagram illustrating a partial configuration of a DAB signal receiving apparatus according to the fifteenth embodiment of the present invention, and illustrates an example of received quality determining section 90 illustrated in FIG.20. The received quality determining section is comprised of Viterbi decoding apparatus 95, coding section 96, hard decision section 97, comparing section 98 and coding error rate measuring section 99.

In the configuration, Viterbi decoding section 95 decodes a signal output from the parallel/serial conversion section in FIG.2, and a sound generating section provided after the section 95 outputs a sound. Meanwhile, coding section 96 encodes the decoded signal in the same way as the coding performed in a transmitting side, and comparing section 98 compares the coded signal with the hard decision result in hard decision section 97 prior to the Viterbi decoding. Coding error rate measuring section 99 examines the compared result to obtain a coding error rate, and inputs the coding error rate to the switching section as a determined result in received quality determining section 90.

### (Sixteenth embodiment)

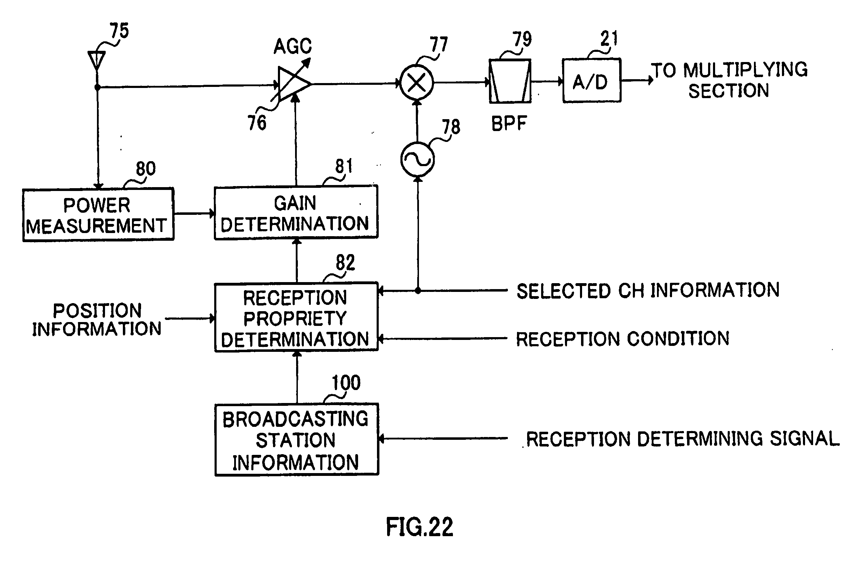

FIG.22 is a block diagram illustrating a configuration of a DAB signal receiving apparatus according to the sixteenth embodiment of the present invention, and illustrates an input section of the broadcasting station information illustrated in FIG.17. In the configuration, the stored contents in broadcasting station information storage section 100 is updated as illustrated in FIG.22 when a decoded reception determining signal contains information indicative of a position and/or broadcasting frequency of a broadcasting station.

### (Seventeenth embodiment)

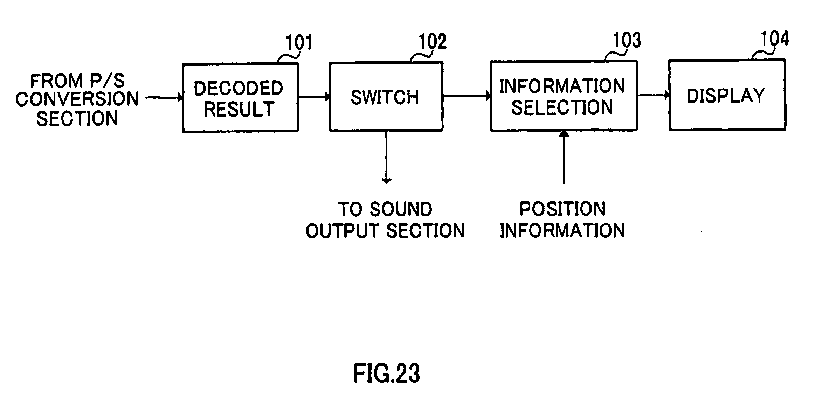

FIG.23 is a block diagram illustrating a partial configuration of a DAB signal receiving apparatus according to the seventeenth embodiment of the present invention. The signal receiving apparatus in FIG.23 has decoding section 101, switching section 102, information selecting section 103 and display section 104.

In the configuration, decoding section 101 decodes a signal output from the parallel/serial conversion section, and switching section 102 separates the decoded signal into a sound signal and data signal, and inputs the data signal to information selecting section 103.

Information selecting section 103 judges whether the data signal is related to a current position of the receiving apparatus while examining the position information of the receiving apparatus obtained in the method as described in any of the twelfth embodiment to fourteenth embodiment, and displays only related information in display section 104. It is also preferable to display information that is not related to the current position of the receiving apparatus as well as the position-related information displayed in a form of emphasis or always displayed.

A signal receiving apparatus of the present invention for receiving a DAB signal having a Null signal has an analog/digital conversion section, a digital mixing section comprised of a numerically controlled oscillation section and a multiplying section, a low pass filter for canceling an alias component, a storage section for storing a tap coefficient group for initial acquisition as tap coefficients of the low pass filter, another storage section for storing another tap coefficient group used for a signal modulation filter after the initial acquisition is completed, an initial acquisition completion detecting section, and a switching section for switching between the two tap coefficient groups based on a result detected in the initial acquisition completion detecting section.

According to this configuration, the initial acquisition is completed fast by using a filter suitable for detecting the Null signal, and reception performance does not deteriorate by switching the filter to a general filter after the initial acquisition is completed. Further, according to this configuration, since it is not necessary to provide another filter suitable for detecting the Null signal separately, a circuit scale can be reduced.

The signal receiving apparatus of the present invention with the above the configuration adopts a constitution where the storage section for the tap coefficient group for the initial acquisition stores the tap coefficient group with a characteristic that provides a low pass filter with a sufficiently narrowband enabling the Null signal to be detected even when an adjacent interfering signal with a high level in a vicinity of a desired channel signal makes it difficult to detect the Null signal of the desired channel signal using a DAB signal demodulation filter.

According to this constitution, the initial acquisition is completed fast even when an adjacent channel interfering signal with a high level is present in the vicinity of a desired channel signal and therefore it is difficult to detect the Null signal of the desired channel signal using a DAB signal demodulation filter, and it is possible to receive signals in a reception area where adjacent channel power is large.

The signal receiving apparatus of the present invention with the above constitution adopts another constitution where a filter in which the tap coefficient group is switched to the tap coefficient group for the initial acquisition is used only for either a quadrature component or an in-phase component.

According to this constitution, it is possible to reduce a circuit scale. Further an estimation error is decreased of a frequency offset amount in detecting a timing of the Null signal, performing parallel/serial conversion on a received signal for FFT, performing FFT on the resultant, and based on a result of FFT, estimating the frequency offset amount to perform frequency control as compared to a case where both the quadrature component and in-phase component are processed with narrowband filters, whereby it is possible to complete the initial acquisition including frequency synchronization rapidly.

The signal receiving apparatus of the present invention with the above constitution adopts another constitution where the initial acquisition completion detecting section detects the correlation of a signal obtained by performing FFT on a phase reference signal transmitted after the Null signal with a signal with a frequency of the phase reference signal stored in advance in the receiving apparatus, and when the correlation has a large level, determines that the initial acquisition is completed.

According to this constitution, the correlation level of the phase reference signal is extremely high when the acquisition is completed, whereby it is possible to decrease an error detected possibility at the time the initial acquisition is completed, and to complete the initial acquisition including frequency synchronization rapidly.

The signal receiving apparatus of the present invention with the above constitution adopts another constitution having a frequency offset detecting section for detecting a frequency offset amount from the signal with the frequency of the phase reference signal subjected to FFT in a fast Fourier transform section provided after the low pass filter for canceling the alias component, and an auto frequency control section for performing control to compensate for the frequency offset obtained in the frequency offset detecting section using a frequency of a complex sine wave signal output from the numerically controlled oscillation section, where a timing at which the auto frequency controlling section controls the numerically controlled oscillation section is in a Null signal interval.

According to this constitution, the timing for greatly changing an oscillation frequency of the numerically controlled oscillation section is in the Null signal interval that does not affect the reception performance, whereby the reception performance does not deteriorate even when the frequency varies rapidly.

The signal receiving apparatus of the present invention with the above constitution adopts another constitution where the auto frequency control section has an accumulating section for accumulating a value detected in the frequency offset detecting section, a storage section for storing a coefficient for the initial acquisition and another coefficient used after the initial acquisition is completed, and a switching section for switching between two coefficients, where the accumulating section obtains a sum of previously accumulated values and a currently detected frequency offset amount multiplied by a positive coefficient less than or equal to 1, and uses a large number as the coefficient for the initial acquisition until the initial acquisition is completed, while using a small number as the another coefficient used after the initial acquisition is completed.

According to this constitution, a value detected in the frequency offset detecting section is reflected greatly until the initial acquisition is completed and thereby the oscillation frequency of the numerically controlled oscillation section is changed greatly, whereby fast frequency acquisition is made possible, and further it is possible to suppress a rapid frequency variation after the initial acquisition is completed. It is thereby possible to perform stable frequency control that is not adapted to a short-term frequency variation of a local signal to be input to a downconverter, and to achieve stable reception performance.

The signal receiving apparatus of the present invention with the above constitution has an auto gain control section provided after the low pass filter for canceling an alias component, where a timing at which the auto gain control section controls a gain is in a Null signal interval.

According to this constitution, since a timing of gain control is in the Null signal interval that does not affect the received signal, the reception performance does not deteriorate, and can be improved even when a signal level of a desired channel varies, for example, due to fading because the gain control can be adapted to the variation.

The signal receiving apparatus of the present invention with the above constitution adopts another constitution where the auto gain control section has a calculating section for obtaining an absolute value of a signal of either an in-phase component or a quadrature component, an integrating section for integrating the absolute value, an approximating section for inputting an integrated result in the integrating section to a table stored in advance to approximate to a dB value, a storage section for storing an ideal value as the dB value, another calculating section for calculating a difference between the ideal value and the approximated value from the integrated result, and a multiplying section for multiplying a same coefficient by each of the in-phase component and quadrature component corresponding to the difference so as to bring a level of the component close to the ideal value.

According to this constitution, both components are controlled based on the integrated value of either the in-phase component or quadrature component, and calculation to obtain power and a circuit for logarithm calculation can be eliminated, whereby it is possible to miniaturize the receiving apparatus and to prevent the occurrence of gain unbalance in the in-phase component and quadrature component.

The signal receiving apparatus of the present invention with the above constitution adopts another constitution where a filter for demodulating a DAB signal used after the initial acquisition is completed has a characteristic that sufficiently attenuates a signal with a frequency band overlapping a desired channel signal band caused by an alias component of an adjacent channel interfering signal.

According to this constitution, adjacent channel power components are allowed except a component with the frequency band overlapping the signal band due to the alias component, whereby it is not needed to increase a circuit scale to obtain a filter with an unnecessary sharp characteristic. Further, since the signal with the frequency band overlapping the signal band that affects the reception performance is sufficiently attenuated, the reception performance can be satisfied adequately.

The signal receiving apparatus of the present invention with the above constitution has a DC offset compensation section provided after the analog/digital conversion section, where the DC offset compensation section has a low pass filter with a sufficiently narrowband and an adding section, the adding section adds a value for compensating for DC offset component in an output of the low pass filter, and an added signal is subjected to clipping when the added signal overflows.

According to this constitution, even when an inexpensive analog/digital converter that generates the DC offset is used, performing the clipping suppresses the deterioration and further suppresses the effect due to the overflow to a minimum degree, whereby it is possible to achieve an inexpensive receiving apparatus while suppressing the deterioration of the reception performance.

The signal receiving apparatus of the present invention with the above constitution has a plurality of reception antennas, where signals from the plurality of antennas are combined to generate a null in a direction of an adjacent channel interfering signal.

According to this constitution, it is possible to suppress the adjacent channel interference adequately, and it is thereby possible to achieve a receiving apparatus resistant to the adjacent channel interference.

The signal receiving apparatus of the present invention with the above constitution has a position information acquiring section for obtaining information on a position of the receiving apparatus, a storage section for storing a position and a broadcasting channel of a broadcasting channel, and a determining section for determining a channel enabling the receiving apparatus to receive by comparing information of the two sections, where when a signal of the channel cannot be received due to an effect of an interfering adjacent channel signal in the vicinity of a desired channel signal, although it is determined that the signal of the channel can be received, the apparatus increases a power level of a signal to be input to a downconverter, and performs control for demodulating a desired channel signal while allowing a certain degree of mutual demodulation distortion.

According to this constitution, reception is made possible in an area where the reception is not possible conventionally due to adjacent channel interference, whereby the reception area is can be expanded.

The signal receiving apparatus of the present invention with the above constitution adopts another constitution where the position information acquiring section that obtains information on a position of the receiving apparatus uses a signal from GPS.

According to this constitution, since it is possible to obtain accurate information on the position even when the receiving apparatus is mounted with a car moving fast, the reception performance can be improved.

The signal receiving apparatus of the present invention with the above constitution adopts another constitution where the position information acquiring section has a storage section for storing a telephone number or ZIP code in relation to an area in the receiving apparatus, and obtains rough information on a current position using information obtained from a section for use in inputting the telephone number or ZIP code.

According to this constitution, it is possible to obtain the information on the position by inputting a rough place where the receiving apparatus currently exists with a simplified method in a stationary receiving apparatus, whereby the reception performance can be improved with a less burden of a user.

The signal receiving apparatus of the present invention with the above constitution adopts another constitution where the position information acquiring section receives TII of a plurality of channels transmitted during a Null signal interval, and estimates a current position of the receiving apparatus from a relationship between the received signal quality determining section and TII.

According to this constitution, it is possible to estimate a position only from a received signal, and since an apparatus to be installed is not needed when the apparatus is used in moving, it is possible to achieve an inexpensive receiving apparatus.

The signal receiving apparatus of the present invention with the above constitution adopts another constitution where the received signal quality determining section includes an error rate calculating section that Viterbi-decodes a received signal, codes a decoded result in the same way as in a transmitting side, and compares the coded signal with a signal subjected to hard decision prior to the Viterbi decoding, and obtains a pseudo coding error rate.

According to this constitution, since the received signal quality determining section uses the coding error rate that is an index of the reception performance, it is possible to obtain an accurate received signal quality, and to estimate a position of the receiving apparatus with accuracy relatively.

The signal receiving apparatus of the present invention with the above constitution adopts another constitution where the apparatus uses information indicative of a position and a broadcasting channel of a broadcasting station periodically contained in a received signal to update the information.

According to this constitution, the performance of the receiving apparatus does not deteriorates when a place and/or a broadcasting channel of a broadcasting station is changed.

The signal receiving apparatus of the present invention with the above constitution adopts another constitution where when a signal contains a data signal, the apparatus extracts only data on an area related to a place where the receiving apparatus currently exists to display separately.

According to this constitution, it is possible to acquire information associated with the area where the receiving apparatus exists with simplicity.

The signal receiving apparatus of the present invention with the above constitution adopts another constitution where the data signal is indicative of an advertisement announcement of a shop and/or institution.

According to this constitution, it is possible for an advertiser to perform efficient advertisement announcement, and possible for a user to acquire useful information.

As described above, according to the present invention, the initial acquisition is completed fast even when an adjacent channel is present in the vicinity of a desired channel, the reception performance does not deteriorate after the initial acquisition, and a circuit scale can be miniaturized, whereby it is possible to provide a compact DAB signal receiving apparatus.

The present invention is not limited to the above described embodiments, and various variations and modifications may be possible without departing from the scope of the present invention.

This application is based on the Japanese Patent Application No.HEI11-362280 filed on December 21, 1999_{.}

## Claims

1. A signal receiving apparatus adapted to receive a signal having a Null signal, said apparatus comprising:
analog/digital conversion means(21);
digital mixing means (22, 22', 23) comprised of numerically controlled oscillation means and multiplying means;
low pass filtering means(24,24') for canceling an alias component;
means(30) for storing a tap coefficient group for initial acquisition as tap coefficients of the low pass filtering means;
means(31) for storing another tap coefficient group used for a signal modulation filter after the initial acquisition is completed;
initial acquisition completion detecting means(28); and silt
means(29) for switching between said tap coefficient group and said another tap coefficient group based on a result detected in the initial acquisition completion detecting means.

2. The signal receiving apparatus according to claim 1, wherein the means for storing the tap coefficient group for initial acquisition is adapted to store the tap coefficient group with a characteristic that provides a low pass filter with a sufficiently narrowband enabling the Null signal to be detected even when an adjacent interfering signal with a high level in a vicinity of a desired channel signal makes it difficult to detect the Null signal of the desired channel signal using the signal demodulation filter.

3. The signal receiving apparatus according to claim 2, wherein a filter in which a tap coefficient group is switched to the tap coefficient group for initial acquisition is used only for either a quadrature component or an in-phase component.

4. The signal receiving apparatus according to claim 1, wherein the initial acquisition completion means is adapted to detect correlation of a signal obtained by performing fast Fourier transform on a phase reference signal transmitted after the Null signal with a signal with a frequency of the phase reference signal stored in advance in the receiving apparatus, and when the correlation has a large level, to determine that the initial acquisition is completed.

5. The signal receiving apparatus according to claim 1, further comprising:
frequency offset detecting means(40) for detecting a frequency offset amount from a signal with a frequency of the phase reference signal subjected to fast Fourier transform in fast Fourier transform means provided after the low pass filtering means for canceling the alias component; and
auto frequency control means for performing control to compensate for the frequency offset obtained in the frequency offset detecting means using a frequency of a complex sine wave signal output from the numerically controlled oscillation means,
wherein a timing at which the auto frequency controlling means controls the numerically controlled oscillation means is in a Null signal interval.

6. The signal receiving apparatus according to claim 5, wherein the auto frequency control means comprising:
accumulating means for accumulating a value detected in the frequency offset detecting means;
storage means for storing a coefficient for the initial acquisition and another coefficient used after the initial acquisition is completed; and
switching means for switching between the coefficient and another coefficient,
wherein the accumulating means obtains a sum of previously accumulated values and a currently detected frequency offset amount multiplied by a positive coefficient less than or equal to 1, and uses a large number as the coefficient for the initial acquisition until the initial acquisition is completed, while using a small number as the another coefficient used after the initial acquisition is completed.

7. The signal receiving apparatus according to claim 1, wherein the apparatus further comprises auto gain control means provided after the low pass filtering means for canceling an alias component, and a timing at which the auto gain control means controls a gain is in a Null signal interval.

8. The signal receiving apparatus according to claim 7, wherein the auto gain control section comprising:
calculating means for obtaining an absolute value of a signal of either an in-phase component or a quadrature component;
integrating means for integrating the absolute value;
approximating means for inputting an integrated result in the integrating means to a table stored in **advance to approximate to a dB value;**
storage means for storing an ideal value as the dB value;
difference calculating means for calculating a difference between the ideal value and an approximated value from the integrated result; and
multiplying means for multiplying a same coefficient by each of the in-phase component and quadrature component corresponding to the difference so as to bring a level of the component close to the ideal value.

9. The signal receiving apparatus according to claim 1, wherein a filter for demodulating a DAB signal used after the initial acquisition is completed has a characteristic that sufficiently attenuates a signal with a frequency band overlapping a desired channel signal band caused by an alias component of an adjacent channel interfering signal.

10. The signal receiving apparatus according to claim 1, further comprising:
DC offset compensation means(61) provided after the analog/digital conversion means;
wherein the DC offset compensation means has a low pass filter with a sufficiently narrowband and adding means, the adding means is adapted to add a value for compensating for DC offset component in an output of the low pass filter, and an added signal is subjected to clipping when the added signal overflows.

11. The signal receiving apparatus according to claim 1, wherein said apparatus has a plurality of reception antennas, and is adapted to combine signals from the plurality of antennas to generate a null in a direction of an adjacent channel interfering signal.

12. The signal receiving apparatus according to claim 1, further comprising:
position information acquiring means for obtaining information on a position of the receiving apparatus;
storage means for storing a position and a broadcasting channel of a broadcasting station; and
determining means for determining a channel enabling the receiving apparatus to receive by comparing the position information acquiring means with the storage means,
wherein when a signal of the channel cannot be received due to an effect of an interfering adjacent channel signal in a vicinity of a desired channel signal, although it is determined that the signal of the channel can be received, the apparatus increases a power level of a signal to be input to a downconverter, and performs control for demodulating a desired channel signal while allowing a certain degree of mutual demodulation distortion.

13. The signal receiving apparatus according to claim 12 , wherein the position information acquiring means is adapted to use a signal from GPS.

14. The signal receiving apparatus according to claim 12, wherein the position information acquiring means has storage means for storing a telephone number or ZIP code in relation to an area in the receiving apparatus, and is adapted to obtain rough information on a current position using information obtained from means for use in inputting the telephone number or ZIP code.

15. The signal receiving apparatus according to claim 12, wherein the position information acquiring means is adapted to receive Transmitter Identification Information TII of a plurality of channels transmitted during a Null signal interval, and to estimate a current position of the receiving apparatus from a relationship between the received signal quality determining means and TII.

16. The signal receiving apparatus according to claim 15, wherein the received signal quality determining means is adapted to Viterbi-decode a received signal, to code a decoded result in the same way as in a transmitting side, to compare a coded signal with a signal subjected to hard decision prior to Viterbi decoding, and to obtain a pseudo coding error rate

17. The signal receiving apparatus according to claim 12, wherein the apparatus is adapted to use information indicative of a position and a broadcasting channel of a broadcasting station periodically contained in a received signal to update the information.

18. The signal receiving apparatus according to claim 12, wherein when a transmission signal contains a data signal, the apparatus is adapted to extract only data on an area related to a place where the receiving apparatus currently exists to display separately.

19. The signal receiving apparatus according to claim 18, wherein the data signal is indicative of an advertisement announcement of a shop and/or institution.

## Patentansprüche

1. Signalempfangsvorrichtung, die so eingerichtet ist, dass sie ein Signal mit einem Null-Signal empfängt, wobei die Vorrichtung umfasst:
eine Analog/Digital-Umwandlungseinrichtung (21);
eine digitale Mischeinrichtung (22, 22', 23), die aus einer numerisch gesteuerten Oszillationseinrichtung und einer Multipliziereinrichtung besteht;
eine Tiefpassfiltereinrichtung (24, 24'), die eine Verzerrungskomponente unterdrückt;
eine Einrichtung (30) zum Speichern einer Abgriffkoeffizientengruppe zur anfänglichen Erfassung als Abgriffkoeffizienten der Tiefpassfiltereinrichtung;
eine Einrichtung (31) zum Speichern einer anderen Abgriffkoeffizientengruppe, die für ein Signalmodulationsfilter verwendet wird, nachdem die anfängliche Erfassung abgeschlossen ist;
eine Einrichtung (28) zum Erkennen des Abschlusses der anfänglichen Erfassung; und
eine Einrichtung (29) zum Umstellen zwischen der Abgriffkoeffizientengruppe und der anderen Abgriffkoeffizienten auf Bas is eines in der Einrichtung zum Erkennen des Abschlusses der anfänglichen Erfassung erkannten Ergebnisses.

2. Signalempfangsvorrichtung nach Anspruch 1, wobei die Einrichtung zum Speichern der Abgriffkoeffizientengruppe zur anfänglichen Erfassung so eingerichtet ist, dass sie die Abgriffkoeffizientengruppe mit einer Charakteristik speichert, die ein Tiefpassfilter mit einem ausreichend schmalen Band schafft, so dass das Null-Signal selbst dann erkannt werden kann, wenn ein angrenzendes störendes Signal mit einem hohen Pegel in einer Nähe eines gewünschten Kanalsignals es erschwert, das Null-Signal des erwünschten Signalkanals unter Verwendung des Signaldemodulationsfilters zu erfassen.

3. Signalempfangsvorrichtung nach Anspruch 2, wobei ein Filter, in dem eine Abgriff koeffizientengruppe auf die Abgriffkoeffizientengruppe zur anfänglichen Erfassung umgestellt wird, nur entweder für eine Quadraturkomponente oder eine gleichphasige Komponente verwendet wird.

4. Signalempfangsvorrichtung nach Anspruch 1, wobei die Einrichtung zum Erkennen des Abschlusses anfänglicher Erfassung so eingerichtet ist, dass sie Korrelation eines Signals, das ermittelt wird, indem schnelle Fouriertransformation an einem Phasenbezugssignal durchgeführt wird, das nach dem Null-Signal gesendet wird, mit einem Signal mit einer Frequenz des Phasenbezugssignals erkennt, das im Voraus in der Empfangsvorrichtung gespeichert wird, und, wenn die Korrelation einen hohen Pegel hat, feststellt, dass die anfängliche Erfassung abgeschlossen ist.

5. Signalempfangsvorrichtung nach Anspruch 1, die des Weiteren umfässt:
eine Frequenzversatz-Erkennungseinrichtung (40), die ein Frequenzversatzmaß aus einem Signal mit einer Frequenz des Phasenbezugssignals erkennt, das schneller Fouriertransformation in einer Einrichtung für schnelle Fouriertransformation unterzogen wird, die nach der Tiefpassfiltereinrichtung vorhanden ist, um die Verzerrungskomponente zu unterdrücken; und
eine automatische Frequenzsteuereinrichtung, die Steuerung durchführt, um den in der Frequenzversatz-Erkennungseinrichtung ermittelten Frequenzversatz unter Verwendung eines komplexen Sinuswellensignals zu kompensieren, das von der numerisch gesteuerten Oszillationseinrichtung ausgegeben wird,
wobei eine Zeit, zu der die automatische Frequenzsteuereinrichtung die numerisch gesteuerte Oszillationseinrichtung steuert, in einem Null-Signal-Intervall liegt.

6. Signalempfangsvorrichtung nach Anspruch 5, wobei die automatische Frequenzsteuereinrichtung umfasst:
eine Akkumulationseinrichtung, die einen in der Frequenzversatz-Erkennungseinrichtung erkannten Wert akkumuliert;
eine Speichereinrichtung, die einen Koeffizienten zur anfänglichen Erfassung und einen weiteren Koeffizienten speichert, der verwendet wird, nachdem die anfängliche Erfassung abgeschlossen ist; und
eine Umstelleinrichtung zum Umstellen zwischen dem Koeffizienten und dem anderen Koeffizienten,
wobei die Akkumuliereinrichtung eine Summe zuvor akkumulierter Werte und einer aktuell erkannten Frequenzversatzgröße multipliziert mit einem positiven Koeffizienten kleiner oder gleich 1 ermittelt und eine große Zahl als den Koeffizienten zur anfänglichen Erfassung verwendet, bis die anfängliche Erfassung abgeschlossen ist, während eine kleine Zahl als der andere Koeffizient verwendet wird, der verwendet wird, nachdem die anfängliche Erfassung abgeschlossen ist.

7. Signalempfangsvorrichtung nach Anspruch 1, wobei die Vorrichtung des Weiteren eine automatische Verstärkungssteuereinrichtung umfasst, die nach der Tiefpassfiltereinrichtung vorhanden ist, um eine Verzerrungskomponente zu unterdrücken, und eine Zeit, zu der die automatische Verstärkungssteuereinrichtung eine Verstärkung steuert, in einem Null-Signal-Intervall liegt.

8. Signalempfangsvorrichtung nach Anspruch 7, wobei der automatische Verstärkungssteuerabschnitt umfasst:
eine Berechnungseinrichtung, die einen Absolutwert eines Signals entweder einer gleichphasigen Komponente oder einer Quadraturkomponente ermittelt;
eine Integriereinrichtung, die den Absolutwert integriert;
eine Näherungseinrichtung, die ein integriertes Ergebnis in der Integriereinrichtung in eine Tabelle eingibt, die im Voraus gespeichert wird, um eine Näherung an einen dB-Wert zu ermitteln;
eine Speichereinrichtung, die einen Idealwert als den dB-Wert speichert;
eine Differenzberechnungseinrichtung, die eine Differenz zwischen dem Idealwert und einem Näherungswert aus dem integrierten Ergebnis berechnet; und
eine Multipliziereinrichtung, die ein und denselben Koeffizienten jeweils mit der gleichphasigen Komponente und der Quadraturkomponente multipliziert, die der Differenz entsprechen, um so einen Pegel der Komponente nahe an den ldealwert zu bringen.

9. Signalempfangsvorrichtung nach Anspruch 1, wobei ein Filter zum Demodulieren eines DAB-Signals, das verwendet wird, nachdem die anfängliche Erfassung abgeschlossen ist, eine Charakteristik hat, die ein Signal mit einem Frequenzband ausreichend dämpft, das ein gewünschtes Kanalsignalband überlappt, das durch eine Verzerrungskomponente eines störenden Signals eines angrenzenden Kanals verursacht wird.

10. Signalempfangsvorrichtung nach Anspruch 1, die des Weiteren umfasst:
eine Gleichspannungs-Offset-Kompensationseinrichtung (61), die nach der Analog/Digital-Umwandlungseinrichtung vorhanden ist;
wobei die Gleichspannungs-Offset-Kompensationseinrichtung ein Tiefpassfilter mit einem ausreichend schmalen Band und eine Addiereinrichtung hat und die Addiereinrichtung so eingerichtet ist, dass sie einen Wert zum Kompensieren einer Gleichspannungs-Offset-Komponente in einem Ausgang des Tiefpassfilters addiert und ein addiertes Signal Begrenzung unterzogen wird, wenn das addierte Signal überläuft.

11. Signalempfangsvorrichtung nach Anspruch 1, wobei die Vorrichtung eine Vielzahl von Empfangsantennen hat und so eingerichtet ist, dass sie Signale von der Vielzahl von Antennen kombiniert, um eine Null in einer Richtung eines störenden Signals eines angrenzenden Kanals zu erzeugen.

12. Signalempfangsvorrichtung nach Anspruch 1, die des Weiteren umfasst:
eine Positionsinformations-Bestimmungseinrichtung, die Informationen über eine Position der Empfangsvorrichtung ermittelt;
eine Speichereinrichtung, die eine Position und einen Rundsendekanal einer Rundsendestation speichert; und
eine Bestimmungseinrichtung, die einen Kanal bestimmt, der die Empfangsvorrichtung befähigt zu empfangen, indem sie die Positionsinformations-Erfassungseinrichtung mit der Speichereinrichtung vergleicht,
wobei, wenn ein Signal des Kanals aufgrund einer Auswirkung eines störenden Signals eines angrenzenden Kanals in der Nähe eines gewünschten Kanalsignals nicht empfangen werden kann, obwohl bestimmt wird, dass das Signal des Kanals empfangen werden kann, die Vorrichtung einen Leistungspegel eines in einen Abwärtsumsetzer einzugebenden Signals erhöht und Steuerung zum Demodulieren eines gewünschten Kanalsignals durchführt, wobei gleichzeitig ein bestimmter Grad an gegenseitiger Demodulationsverzerrung zugelassen wird.

13. Signalempfangsvorrichtung nach Anspruch 12, wobei die Positionsinformations-Erfassungseinrichtung so eingerichtet ist, dass sie ein GPS-Signal nutzt.

14. Signalempfangsvorrichtung nach Anspruch 12, wobei die Positionsinformations-Erfassungseinrichtung eine Speichereinrichtung zum Speichern einer Telefonnummer oder einer Postleitzahl im Zusammenhang mit einem Bereich in der Empfangsvorrichtung aufweist und so eingerichtet ist, dass sie ungefähre Informationen über eine aktuelle Position unter Verwendung von Informationen ermittelt, die von einer Einrichtung zur Verwendung beim Eingeben der Telefonnummer oder der Postleitzahl ermittelt werden.

15. Signalempfangsvorrichtung nach Anspruch 12, wobei die Positionsinformations-Erfassungseinrichtung so eingerichtet ist, dass sie Senderidentifizierungsinformationen (transmitter identification information - TII) einer Vielzahl von Kanälen empfängt, die während eines Null-Signal-Intervalls gesendet werden, und eine aktuelle Position der Empfangsvorrichtung anhand einer Beziehung zwischen der Einrichtung zum Bestimmen der Qualität eines empfangenen Signals und der TII schätzt.

16. Signalempfangsvorrichtung nach Anspruch 15, wobei die Einrichtung zum Bestimmen der Qualität des empfangenen Signals so eingerichtet ist, dass sie Viterbi-Decodierung eines empfangenen Signals durchführt, ein decodiertes Signal auf die gleiche Weise wie an einer Sendenseite codiert, ein codiertes Signal mit einem Signal vergleicht, das vor Viterbi-Decodierung Hartentscheidung (hard decision) unterzogen wird, und eine Pseudo-Codierfehlerrate ermittelt.

17. Signalempfangsvorrichtung nach Anspruch 12, wobei die Vorrichtung so eingerichtet ist, dass sie Informationen verwendet, die eine Position und einen Rundsendekanal einer Rundsendestation anzeigen, die periodisch in einem empfangenen Signal enthalten sind, um die Informationen zu aktualisieren.

18. Signalempfangsvorrichtung nach Anspruch 12, wobei ein Sendesignal ein Datensignal enthält und die Vorrichtung so eingerichtet ist, dass sie nur Daten über ein Gebiet extrahiert, das mit einem Ort zusammenhängt, an dem sich die Empfangsvorrichtung augenblicklich befindet, um sie separat anzuzeigen.

19. Signalempfangsvorrichtung nach Anspruch 18, wobei das Datensignal eine Werbeanzeige eines Geschäfts und/oder einer Einrichtung anzeigt.

## Revendications

1. Dispositif de réception de signal conçu pour recevoir un signal comportant un signal nul, ledit dispositif comprenant :
un moyen de conversion d'analogique en numérique (21),
un moyen de mélange numérique (22, 22', 23) constitué d'un moyen d'oscillation commandé numériquement et d'un moyen de multiplication,
un moyen de filtrage par filtre passe-bas (24, 24') destiné à annuler une composante de repliement,
un moyen (30) destiné à mémoriser un groupe de coefficients de prise en vue d'une acquisition initiale en tant que coefficients de prise du moyen de filtrage par filtre passe-bas,
un moyen (31) destiné à mémoriser un autre groupe de coefficients de prise utilisé pour un filtre de modulation de signal après que l'acquisition initiale est terminée,
un moyen de détection d'achèvement d'acquisition initiale (28), et
un moyen (29) destiné à basculer entre ledit groupe de coefficients de prise et ledit autre groupe de coefficients de prise sur la base d'un résultat détecté dans le moyen de détection d'achèvement d'acquisition initiale.

2. Dispositif de réception de signal selon la revendication 1, dans lequel le moyen destiné à mémoriser le groupe de coefficients de prise en vue d'une acquisition initiale est conçu pour mémoriser le groupe de coefficients de prise avec une caractéristique qui fournit à un filtre passe-bas une bande suffisamment étroite permettant au signal nul d'être détecté même lorsqu'un signal parasite adjacent présentant un niveau élevé à proximité d'un signal de canal désiré rend difficile la détection du signal nul du signal de canal désiré en utilisant le filtre de démodulation de signal.

3. Dispositif de réception de signal selon la revendication 2, dans lequel un filtre dans lequel un groupe de coefficients de prise est basculé vers le groupe de coefficients de prise en vue d'une acquisition initiale est utilisé uniquement pour soit une composante en quadrature, soit une composante en phase.

4. Dispositif de réception de signal selon la revendication 1., dans lequel le moyen d'achèvement d'acquisition initiale est conçu pour détecter la corrélation d'un signal obtenu en exécutant une transformation de Fourier rapide sur un signal de référence de phase transmis après le signal nul avec un signal présentant une fréquence du signal de référence de phase mémorisé à l'avance dans le dispositif de réception, et lorsque la corrélation présente un niveau important, pour déterminer que l'acquisition initiale est terminée.

5. Dispositif de réception de signal selon la revendication 1, comprenant en outre :
un moyen de détection de décalage de fréquence (40) destiné à détecter une valeur de décalage de fréquence à partir d'un signal présentant une fréquence du signal de référence de phase soumis à une transformation de Fourier rapide dans le moyen de transformation de Fourier rapide prévu après le moyen de filtrage par filtre passe-bas destiné à annuler la composante de repliement, et
un moyen de commande de fréquence automatique destiné à exécuter une commande pour compenser le décalage de fréquence obtenu dans le moyen de détection de décalage de fréquence en utilisant une fréquence d'un signal d'onde sinusoïdale complexe fourni en sortie à partir du moyen d'oscillation commandé numériquement,
dans lequel, un moment auquel le moyen de commande de fréquence automatique commande le moyen d'oscillation commandé numériquement se situe dans un intervalle du signal nul.

6. Dispositif de réception de signal selon la revendication 5, dans lequel le moyen de commande de fréquence automatique comprend :
un moyen de cumul destiné à cumuler une valeur détectée dans le moyen de détection de décalage de fréquence,
un moyen de mémorisation destiné à mémoriser un coefficient pour l'acquisition initiale et un autre coefficient utilisé après que l'acquisition initiale est terminée, et
un moyen de commutation destiné à basculer entre le coefficient et un autre coefficient,
dans lequel le moyen de cumul obtient la somme des valeurs précédemment cumulées et d'une valeur de décalage de fréquence actuellement détectée multipliée par un coefficient positif inférieur ou égal à 1, et utilise un grand nombre en tant que coefficient pour l'acquisition initiale jusqu'à ce que l'acquisition initiale soit terminée, tout en utilisant un petit nombre en tant qu'autre coefficient utilisé après que l'acquisition initiale est terminée.

7. Dispositif de réception de signal selon la revendication 1, dans lequel le dispositif comprend en outre un moyen de commande automatique de gain prévu après le moyen de filtrage par filtre passe-bas destiné à annuler une composante de repliement, et le moment auquel le moyen de commande automatique de gain commande un gain se trouve dans un intervalle du signal nul.

8. Dispositif de réception de signal selon la revendication 7, dans lequel la section de commande automatique de gain comprend :
un moyen de calcul destiné à obtenir une valeur absolue d'un signal soit d'une composante en phase, soit d'une composante en quadrature,
un moyen d'intégration destiné à intégrer la valeur absolue,
un moyen d'approximation destiné à appliquer en entrée un résultat intégré dans le moyen d'intégration à une table mémorisée à l'avance pour s'approcher d'une valeur en dB,
un moyen de mémorisation destiné à mémoriser une valeur idéale en tant que valeur en dB,
un moyen de calcul de différence destiné à calculer une différence entre la valeur idéale et une valeur approchée provenant du résultat intégré, et
un moyen de multiplication destiné à multiplier un même coefficient par chacune de la composante en phase et de la composante en quadrature correspondant à la différence de façon à amener le niveau de la composante proche de la valeur idéale.

9. Dispositif de réception de signal selon la revendication 1, dans lequel un filtre destiné à démoduler un signal de diffusion DAB utilisé après que l'acquisition initiale est terminée, présente une caractéristique qui atténue suffisamment un signal présentant une bande de fréquences chevauchant une bande de signaux de canaux désirée provoquée par une composante de repliement d'un signal parasite de canal adjacent.

10. Dispositif de réception de signal selon la revendication 1, comprenant en outre :
un moyen de compensation de décalage du niveau continu (61) prévu après le moyen de conversion d'analogique en numérique,
où le moyen de compensation de décalage du niveau continu comporte un filtre passe-bas présentant une bande suffisamment étroite et un moyen d'addition, le moyen d'addition est conçu pour ajouter une valeur destinée à compenser la composante de décalage de niveau continu dans une sortie du filtre passe-bas, et un signal additionné est soumis à un écrêtage lorsque le signal additionné dépasse.

11. Dispositif de réception de signal selon la revendication 1, dans lequel ledit dispositif comporte une pluralité d'antennes de réception et est conçu pour combiner les signaux provenant de la pluralité des antennes afin de générer un signal nul dans une direction d'un signal parasite de canal adjacent.

12. Dispositif de réception de signal selon la revendication 1, comprenant en outre :
un moyen d'acquisition d'informations de position destiné à obtenir des informations concernant la position du dispositif de réception,
un moyen de mémorisation destiné à mémoriser une position et un canal de diffusion d'une station de diffusion, et
un moyen de détermination destiné à déterminer un canal permettant au dispositif de réception de recevoir en comparant le moyen d'acquisition d'informations de position au moyen de mémorisation,
où lorsqu'un signal du canal ne peut pas être reçu en raison d'un effet d'un signal de canal adjacent parasite à proximité d'un signal de canal désiré, bien qu'il soit déterminé que le signal du canal peut être reçu, le dispositif augmente un niveau de puissance d'un signal devant être appliqué à un convertisseur abaisseur de fréquence, et exécute une commande pour démoduler un signal de canal désiré tout en permettant un certain degré de distorsion de démodulation mutuelle.

13. Dispositif de réception de signal selon la revendication 12, dans lequel le moyen d'acquisition d'informations de position est conçu pour utiliser un signal provenant d'un système GPS.

14. Dispositif de réception de signal selon la revendication 12, dans lequel le moyen d'acquisition d'informations de position comporte un moyen de mémorisation destiné à mémoriser un numéro de téléphone ou un code postal en ce qui concerne une zone dans le dispositif de réception et est conçu pour obtenir des informations approximatives concernant une position actuelle en utilisant des informations obtenues à partir du moyen en vue d'une utilisation lors de l'application en entrée du numéro de température ou du code postal.

15. Dispositif de réception de signal selon la revendication 12, dans lequel le moyen d'acquisition d'informations de position est conçu pour recevoir des informations d'identification d'émetteur TII d'une pluralité de canaux transmis durant un intervalle de signal nul, et pour estimer une position actuelle du dispositif de réception à partir d'une relation entre le moyen de détermination de qualité de signal reçu et les informations TII.

16. Dispositif de réception de signal selon la revendication 15, dans lequel le moyen de détermination de qualité de signal reçu est conçu pour décoder par décodage de Viterbi un signal reçu, pour coder un résultat décodé de la même façon que du côté d'émission, pour comparer un signal codé à un signal soumis à une décision par des circuits avant le décodage de Viterbi, et pour obtenir un taux de pseudo-erreur de codage.

17. Dispositif de réception de signal selon la revendication 12, dans lequel le dispositif est conçu pour utiliser des informations indicatives d'une position et d'un canal de diffusion d'une station de diffusion périodiquement contenues dans un signal reçu pour mettre à jour les informations.

18. Dispositif de réception de signal selon la revendication 12, dans lequel lorsqu'un signal de transmission contient un signal de données, le dispositif est conçu pour extraire uniquement les données concernant une zone associée à un emplacement où le dispositif de réception existe actuellement en vue d'un affichage séparé.

19. Dispositif de réception de signal selon la revendication 18, dans lequel le signal de données indique une annonce de publicité d'un magasin et/ou d'une institution.
